**Europäisches Patentamt**

**European Patent Office**

**Office européen des brevets**

(19)

⑪ ·Veröffentlichungsnummer: **0 265 460 B1**

(12) **EUROPÄISCHE PATENTSCHRIFT**

(45) Veröffentlichungstag der Patentschrift:
**20.12.89**

(21) Anmeldenummer: **87902375.2**

(22) Anmeldetag: **04.04.87**

(86) Internationale Anmeldenummer:
**PCT/DE 87/00148**

(87) Internationale Veröffentlichungsnummer:
**WO 87/06307 (22.10.87 Gazette 87/23)**

(51) Int. Cl.⁴: **F 02 M 41/06, F 02 M 41/14**

(54) **KRAFTSTOFFEINSPRITZPUMPE FÜR BRENNKRAFTMASCHINEN.**

(30) Priorität: **17.04.86 DE 3612942**

(43) Veröffentlichungstag der Anmeldung:
**04.05.88 Patentblatt 88/18**

(45) Bekanntmachung des Hinweises auf die Patenterteilung:
**20.12.89 Patentblatt 89/51**

(84) Benannte Vertragsstaaten:
**DE FR GB IT**

(56) Entgegenhaltungen:
**EP-A- 0 070 558**
**DE-A- 1 919 707**
**DE-A- 3 010 839**
**DE-A- 3 523 536**
**FR-A- 2 235 276**
**FR-A- 2 257 022**
**GB-A- 2 086 080**

(73) Patentinhaber: **ROBERT BOSCH GMBH, Postfach 50, D-7000 Stuttgart 1 (DE)**

(72) Erfinder: **BRUNEL, André, La Coliniére 2 route de Vourles, F-69230 St. Genis-Laval (FR)**
Erfinder: **DUPLAT, Gérad, 6, rue de la Baviodiére, F-69670 Vaugneray (FR)**
Erfinder: **LEBLANC, Jean, 25, rue Claude Farrère, F-69003 Lyon (FR)**

# Beschreibung

*Stand der Technik*

Die Erfindung geht von einer Kraftstoffeinspritzpumpe nach der Gattung des Hauptanspruchs aus. Bei einer solchen durch die GB-A-2 086 080 bekannten Kraftstoffeinspritzpumpe ist das untere Ende des Verteilers als Kolbenträger ausgebildet, während die Rollen mit ihren Rollenstößeln in Führungen eines Rollenträgerteils gelagert sind. Der Nockenantrieb der Pumpenkolben besteht bei der bekannten Kraftstoffeinspritzpumpe aus einem Nockenring, der ortsfest im Pumpengehäuse gelagert ist, also der feststehende Teil des Nockenantriebs ist. Rotierend angetrieben ist das Rollenträgerteil, das über eine Verzahnung mit der Antriebswelle der Kraftstoffeinspritzpumpe verbunden ist. Diese Antriebswelle ist stirnseitig mit dem stirnseitigen Ende des Verteilers auf der Kolbenträgerteilseite gekoppelt. Mit Hilfe eines Magnetventils wird der einspritzwirksame Förderhub der Pumpenkolben gesteuert, indem für den Einspritzbeginn (Spritzbeginn) ein Entlastungskanal des Pumpenarbeitsraumes durch ein Elektromagnetventil geschlossen wird und zur Festlegung des Spritzendes dieses Ventil wieder geöffnet wird. Bei einem feststehenden Nockenring hat diese Art der Steuerung den Nachteil, daß die Länge der die Pumpenkolben antreibenden Flanke der Nocken des Nockenrings sowohl für die Bemessung der Einspritzdauer als auch die Bemessung des Spritzbeginns dienen muß. Das bedeutet, daß bei spätem Spritzbeginn und großer Kraftstoffeinspritzmenge dann die Grenzen der Betriebstauglichkeit einer solchen Kraftstoffeinspritzpumpe erreicht werden, wenn von dieser Kraftstoffeinspritzpumpe eine große Zahl von Zylindern einer Brennkraftmaschine pro Umdrehung versorgt werden muß, wenn hohe Einspritzdrücke erzeugt werden müssen und hohe Drehzahlen verwirklicht werden sollen, wie das bei modernen direkt einspritzenden Dieselmotoren gefordert wird. Da der Steilheit der Nocken Grenzen gesetzt sind, kann die Länge der Nockenflanke nicht beliebig gesteigert werden. Die bekannte Kraftstoffeinspritzpumpe hat ferner den Nachteil, daß sich die Montage einer solchen Pumpe aufwendig gestaltet. Die Führung der Rollenstößel erfolgt in zum oberen Pumpengehäuseteil offenen Schlitzen, so daß das Rollenträgerteil exakt mit dem Pumpengehäuse fluchten muß, damit die Rollenstößel einwandfrei laufen. Das Rollenträgerteil ist ferner auch nicht radial geführt, so daß es neben Drehschwingungen auch gewissen Kippschwingungen von der Antriebsseite der Antriebswelle her ausgesetzt ist. Die Ankupplung des Verteilers mit der Antriebswelle ist ferner starr und läßt keinen Fluchtungsfehler der Achsen zu.

Insbesondere bei Radialkolbenpumpen der Bauart, bei der der die Nockenbahn tragende Teil des Nockenantriebs rotierend angetrieben ist, während der Kolbenträger feststehend ist, gemäß DE-A-3 010 839, gestaltet sich eine Spritzbeginnverstellung schwierig. Bei der durch diese Schrift bekannten Kraftstoffeinspritzpumpe erfolgt die Spritzbeginnverstellung durch Verändern der Relativstellung des Verteilers zum rotierend angetriebenen Teil des Nockenantriebs, der diesen Verteiler in Rotationsbewegung versetzt. Dies hat aber den Nachteil, daß bei einer Verwendung einer solchen Kraftstoffeinspritzpumpe zu dem bereits oben beschriebenen Zweck ein Großteil der Nockenflanke praktisch für die Spritzbeginnverstellung vorbehalten werden muß, was die Tauglichkeit dieser Kraftstoffeinspritzpumpe für eine Brennkraftmaschine mit einer hohen Anzahl von zu versorgenden Zylindern beschränkt.

*Vorteile der Erfindung*

Die erfindungsgemäße Kraftstoffeinspritzpumpe mit den kennzeichnenden Merkmalen des Hauptanspruchs hat demgegenüber den Vorteil, daß die Pumpenkolben und die die Pumpenkolben antreibenden Rollen in voneinander getrennten Bauteilen geführt werden, die Fluchtungsabweichungen in radialer und axialer Richtung zulassend miteinander gekoppelt sind. Dies hat den Vorteil, daß die vom Nockenantrieb durch Ablaufen der Rollen über die Nockenbahn erzeugten Kräfte nicht derart auf zum Beispiel den Kolbenträgerteil übertragen werden, daß dieser so belastet wird, daß es zu einem Klemmen seiner Führung kommt. Die besondere Anlenkung erlaubt dagegen ein reaktionsarmes Mitlaufen des angekoppelten Teiles, wodurch die Funktionstüchtigkeit der Kraftstoffeinspritzpumpe erhöht wird, insbesondere bei einer Kraftstoffeinspritzpumpe, in der hohe Stoßbelastungen erzeugt werden. Dies tritt bei Kraftstoffeinspritzpumpen der Radialkolbenbauart dann auf, wenn hohe Einspritzdrücke erzeugt werden müssen, wie sie zum Beispiel bei der Verwendung für mit Direkteinspritzung arbeitende Brennkraftmaschinen erforderlich sind. Hohe Stoßbelastungen mit hoher Frequenz treten ferner dann auf, wenn eine Verteilereinspritzpumpe der Radialkolbenbauart für die Versorgung von einer hohen Anzahl von Brennkraftmaschinenzylindern vorgesehen ist, wie das zum Beispiel 8-Zylinderbrennkraftmaschine der Fall ist. Weiterhin läßt sich durch diese Ausgestaltung eine Spritzbeginnsteuerung erzielen durch Relativverstellung des im wesentlichen feststehenden Teils des Nockenantriebs zum im wesentlichen rotierenden Teil des Nockenantriebs. Bei einer Kraftstoffeinspritzpumpe der durch die DE-A-3 010 839 bekannten Bauart wird es dabei ermöglicht, daß der Kolbenträger verdrehbar ausgeführt wird, ohne daß die Gefahr eines Klemmens des nun verdrehbaren Teils auf dem Verteiler gegeben ist.

Gemäß Patentanspruch 1 wird der Kupplungsteil als radialer zwischen Rollenträgerteil und Kolbenträgerteil vorgesehener Kupplungsarm ausgeführt, der bei seiner Anlenkung zum anderen Teil durch die sphärische Ausgestaltung Fluchtungsfehler in allen Richtungen ausgleichen kann.

Eine sehr vorteilhafte Weiterbildung des Gegenstands der Ansprüche 1 bis 4 besteht in der Ausgestaltung gemäß 5, durch die eine Verbindung des Verteilers mit dem rotierend angetriebenen Teil verwirklichbar ist, bei der Fertigungsungenauigkeiten, das heißt Fluchtungsfehler, in einem sehr weitgehenden Umfang kompensiert werden können. Diese dort gezeigte Ausgestaltung hat ferner noch den wesentlichen Vorteil, daß eine sehr einfache Montage der Kraftstoffeinspritzpumpe gewährleistet ist, indem der Verteiler unabhängig von anderen Baugruppen nachträglich in den Verteilerzylinder eingeschoben und mit dem rotierenden Teil gekoppelt werden kann. Dies gilt insbesondere in Verbindung mit den Ausgestaltungen gemäß den Ansprüchen 6 und 7.

In vorteilhafter Weise wird gemäß Anspruch 9 der rotierend angetriebene Teil am Außenumfang im Gehäuse der Kraftstoffeinspritzpumpe geführt, was den Vorteil hat, daß die von dem Antrieb her auf die Antriebswelle wirkenden Kippmomente günstiger ausgeglichen werden können und der rotierende Teil exakt geführt wird. Die Weiterbildung gemäß Anspruch 11 weist den Vorteil auf, daß der Rollenträgerteil die vom Pumpenantrieb auf ihn übertragenen Kräfte großflächig am Pumpenhausgehäuse abstützen kann.

Für die Lagerung des Rollenträgerteils bietet die Ausgestaltung gemäß Anspruch 12 eine vorteilhafte Lösung für die axiale Sicherung. Weiterhin ermöglicht diese eine sehr steife Verbindung des Rollenträgerteils zum Stellmotor.

Die Steuerung der Pumpe erfolgt in vorteilhafter Weise gemäß den Ansprüchen 15 und 16 durch ein elektrisch gesteuertes Ventil, das platzsparend zwischen den Druckanschlüssen an den Druckkanälen an der Einspritzpumpe angeordnet werden kann. Weiterhin bildet das verwendete Ventil insbesondere gemäß Anspruch 17 den Vorteil, daß schon allein mit der Steuerung des Ventils bzw. dessen Schließdauer die Einspritzphase gesteuert werden kann, und zwar sowohl nach Einspritzbeginn als auch Einspritzdauer. Dazu kann zur Steuerung des Einspritzbeginns vorteilhaft ein Druckgeber gemäß Anspruch 18 verwendet werden. Über dieses Ventil läßt sich vorteilhaft sowohl die Füllung des Pumpenarbeitsraumes als auch die Entlastung des Pumpenarbeitsraumes durchführen, gemäß vorteilhafter Weiterbildung nach Anspruch 19 erhält man jedoch eine schnelle und druckverlustfreie Füllung des Pumpenarbeitsraumes insbesondere für Einspritzpumpen für schnell laufende Brennkraftmaschinen. Eine weiterhin vorteilhafte Ausgestaltung wird durch den Gegenstand von Anspruch 23 gegeben, wodurch sich eine wesentliche Montagevereinfachung ergibt, indem zum Beispiel Rollenträgerteil und Kolbenträgerteil zusammen mit Kolben und Rollen vormontiert auf dem das topfförmige Gehäuse verschließenden hydraulischen Block mittels einfaches Zusammenhalten der Rollen schnell und leicht in den Nockenring eingeführt werden können. Dabei braucht das Pumpengehäuse nur zeitweilig ausgeführt werden bei geringer Bauhöhe.

Insbesondere in Verbindung mit der Einspritzmengensteuerung mit Hilfe eines elektrisch gesteuerten Magnetventils ergibt sich eine besonders vorteilhafte Ausgestaltung gemäß Anspruch 25, durch die das Magnetventil vorteilhaft gekühlt werden kann. Dies ist insbesondere bei Magnetventilen vorteilhaft, die mit hohen Stromstärken belastet werden, weil sie zum Beispiel gegen einen Transferdruck im Pumpenarbeitsraum zur Steuerung des Beginns der einspritzwirksamen Kraftstofförderung einen Entlastungskanal schließen müssen. Die im Anspruch 25 angegebene Lösung hat den Vorteil, daß die Spülung des Magneten in Abhängigkeit von der Drehzahl erfolgt und damit zugleich in Abhängigkeit von der Zahl der Betätigungen des Magnetventils bzw. dessen Wärmebelastung. Weiterhin hat diese Ausgestaltung den Vorteil, daß die Spülung die Funktion des Elektromagnetventils nicht stört, weil sie nur in den Betätigungspausen des Magnetventils erfolgt.

Die Steuerung der Kraftstoffeinspritzpumpe erfolgt in vorteilhafter Weise gemäß Anspruch 28, wobei die Belastung des Magnetventils insofern geringer ist, als es gegen den Transferdruck zur Steuerung des einspritzwirksamen Förderhubs nicht erst zugesteuert werden muß. Diese Lösung ist auch vorteilhaft besonders bei Kraftstoffeinspritzpumpen, die für mit hoher Drehzahl betriebene Brennkraftmaschinen vorgesehen sind. Hier wirkt sich einspritzmengensteuerwirksam nur die Schaltzeit beim Öffnen des Magnetventils aus, so daß der Drehzahlfehler bei der Spritzmengensteuerung recht gering ist. Ein Aufwand für eine Fehlerkompensation in diesem Bereich ist hier also nicht notwendig. Vorteilhaft wird die Flanke der Antriebsnocken optimal für die Förderung ausgenutzt, so daß auch eine hohe Zahl von Brennkraftmaschinenzylindern mit einer solchen Einspritzpumpe versorgt werden kann. Zugleich wird die Spritzbeginnverstellung mit Hilfe der Veränderung der Relativstellung des feststehenden Teils des Nockenantriebs zum rotierend angetriebenen Teil bewirkt, wobei in vorteilhafter Weise verschiedene Antriebsstellglieder verwendet werden können. Dabei kann die Verstellung in Abhängigkeit von verschiedenen Parametern erfolgen, die zum Beispiel auch den Warmlauf der Brennkraftmaschine berücksichtigen. Gemäß der Ausgestaltung nach den Ansprüchen 30 und 31 kann hierfür in vorteilhafter und preisgünstiger Weise ein vom drehzahlabhängigen Druck im Innern der Kraftstoffeinspritzpumpe beaufschlagter Stellkolben verwendet werden oder es kann gemäß Anspruch 32 eine exaktere Steuerung dadurch verwirklicht werden, daß mit einem Taktventil oder einem Proportionalventil ein exakter Steuerdruck in Abhängigkeit von verschiedenen Parametern oder nur einem Parameter eingestellt wird. Dabei kann die Spritzbeginnverstellung auch mit Hilfe eines Rückmeldeglieds gemäß Anspruch 18 sowie durch Anpruch 34 gekennzeichnet, geregelt werden.

Werden dagegen noch höhere Anforderungen an die Spritzzeitpunktsteuerung und Mengensteuerung gestellt, so wird vorteilhaft gemäß Anspruch 35 verfahren, was den Vorteil hat, daß vielfältige Eingriffsmöglichkeiten gegeben sind und zudem die Regelgeschwindigkeit zur Vermeidung von Sägen in Übergangszuständen sehr groß gehalten werden kann, da die Spritzzeitpunktsteuerung bereits mit anderen Mitteln vorgesteuert wird.

*Zeichnung*

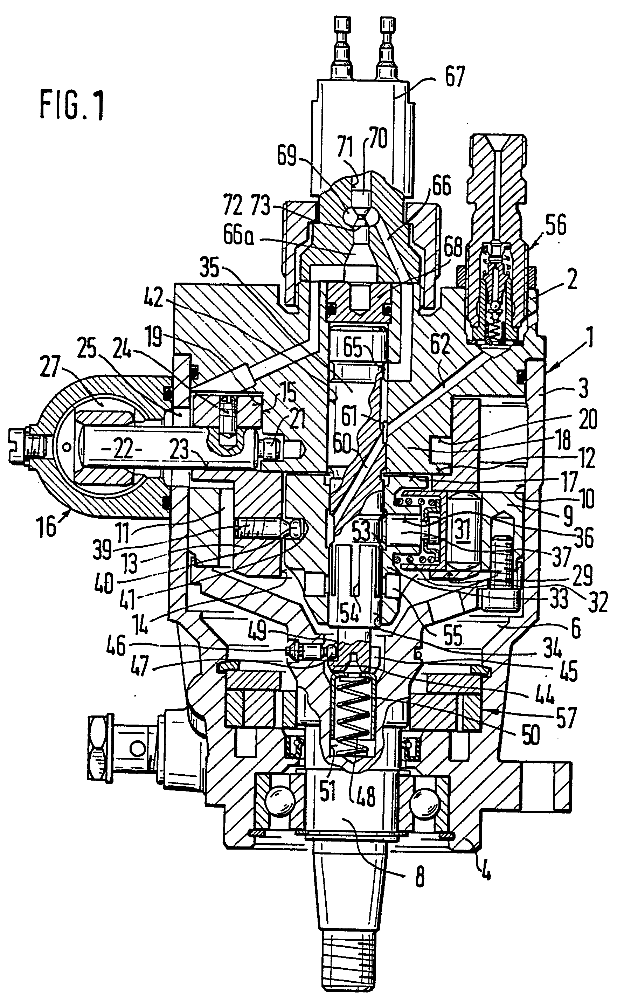

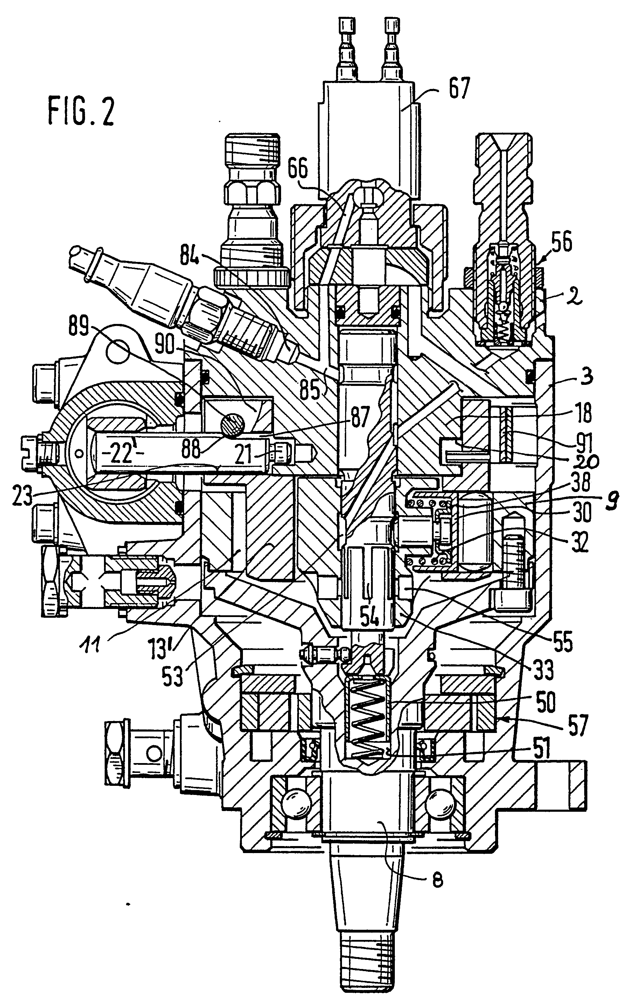

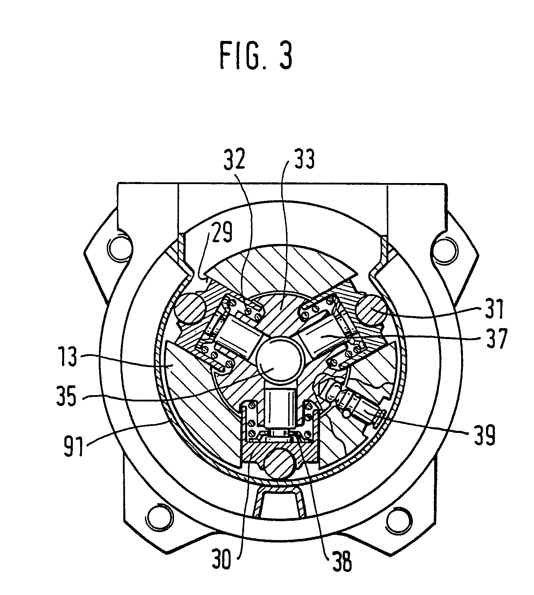

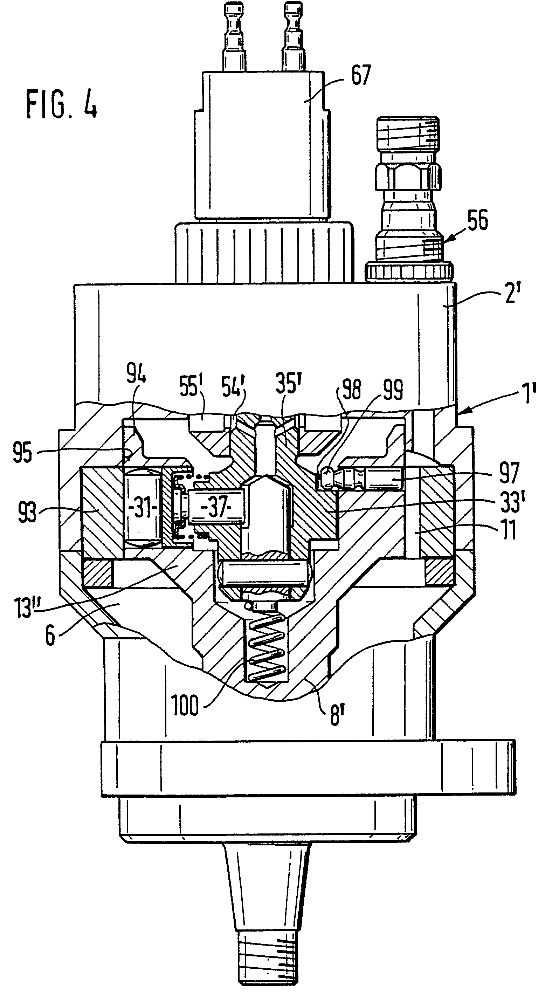

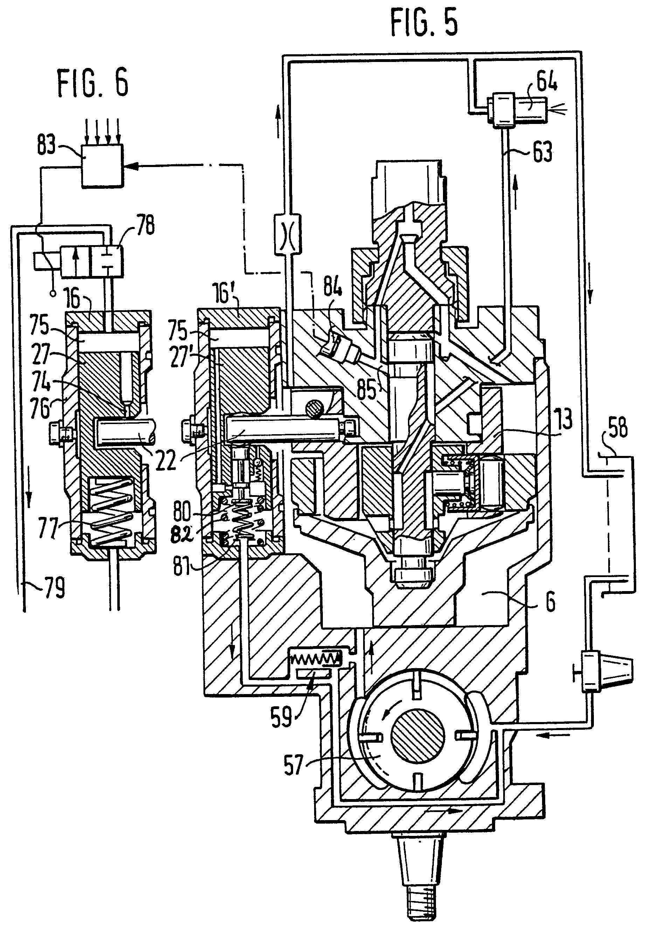

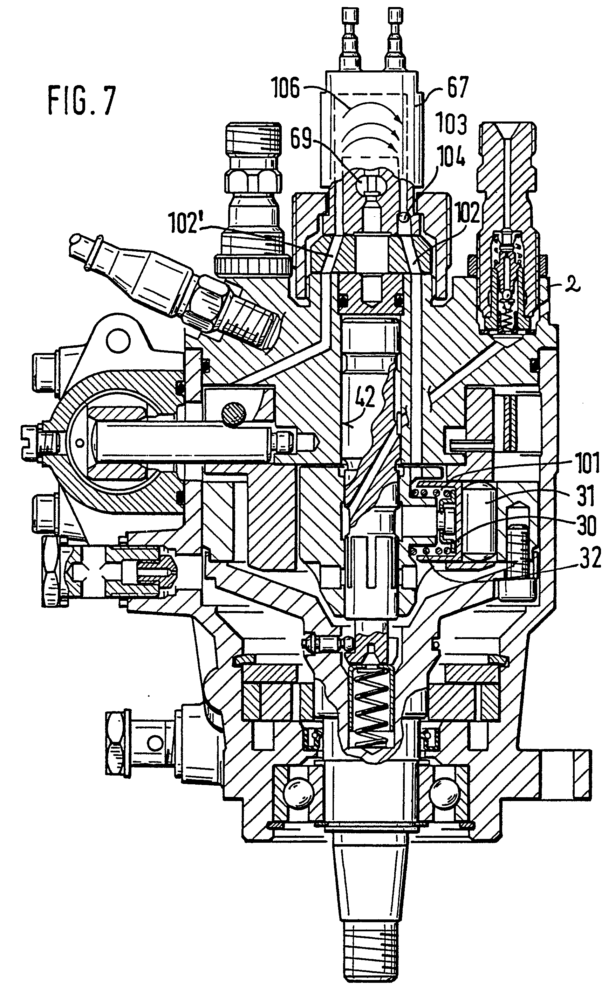

Sechs Ausführungsbeispiele der Erfindung sind in der Zeichnung dargestellt und werden in der nachfolgenden Beschreibung mit ihren Vorteilen näher erläutert. Es zeigen Figur 1 ein erstes Ausführungsbeispiel der erfindungsgemäßen Kraftstoffeinspritzpumpe im Längsschnitt, Figur 2 ein zweites Ausführungsbeispiel anhand eines Längsschnitts durch eine Verteilereinspritzpumpe mit gegenüber dem Ausführungsbeispiel nach Figur 1 abgewandelter Kopplung des Verteilers und des Rollenträgerteils mit dem Spritzversteller, Figur 3 ein drittes Ausführungsbeispiel mit einem in Verbindung mit Figur 2 gezeigten Montagering, Figur 4 ein viertes Ausführungsbeispiel bei einer Verteilerpumpe, die gegenüber vorstehenden Ausführungsbeispielen einen im wesentlichen feststehenden Nockenring aufweist, Figur 5 eine erste Ausführungsform eines Stellmotors (Spritzversteller) zur Betätigung des Rollenträgerteils, Figur 6 eine zweite Ausführungsform des Stellmotors und Figur 7 eine Darstellung eines Kühlkreislaufs des elektrisch betätigten Ventils als siebtes Ausführungsbeispiel der Erfindung.

*Beschreibung der Ausführungsbeispiele*

Bei der Darstellung des ersten Ausführungsbeispiels nach Figur 1 ist in der Zeichnung ein Längsschnitt durch eine Verteilerkraftstoffeinspritzpumpe der Radialkolbenbauart dargestellt. Das Gehäuse der Einspritzpumpe besteht aus einem topfförmigen Gehäuseteil 1 und einem diesen verschließenden Deckelteil 2, der auch als hydraulischer Kopf bezeichnet werden kann. Das topfförmige Gehäuseteil weist einen zylindrischen Teil 3 auf und ein Bodenteil 4, wobei vom offenen Ende des zylindrischen Teils her das Deckelteil eingeschoben wird für einen dichten Einschluß eines Pumpeninnenraums 6. Konzentrisch wird durch das Bodenteil 4 eine Antriebswelle 8 geführt, die sich im Innenraum 6 der Kraftstoffeinspritzpumpe topfartig erweitert und dort an den Rändern mit einem Nockenring 9 verbunden ist, der mit seinem Außendurchmesser an der zylindrischen Wand 10 des zylindrischen Teils 3 geführt wird. Der Nockenring weist auf seiner Innenseite eine Nockenbahn 11 auf mit radial nach innen gerichteten Nocken, die in Zahl und Folge an die Zahl und Folge von Pumpenkolben angepaßt sind, die in der Kraftstoffeinspritzpumpe vorgesehen sind und der Zahl der mit diesem Pumpenkolben pro Umdrehung auszuführenden Pumpenkolbenförderhübe. Der Nockenring 9 in Verbindung mit der Antriebswelle 8 stellt einen rotierend angetriebenen Teil eines Nockenantriebs dar, mit dem die Pumpenkolben bewegt werden.

Der Nockenbahn 11 benachbart, radial nach innen anschließend ist ein Rollenträgerteil 13 vorgesehen, der ein Ringelement darstellt, wobei die Ringform durch eine innere Stufenbohrung gebildet wird aus einem ersten Stufenbohrungsteil 14 mit kleinerem Durchmesser und einem zweiten Stufenbohrungsteil 15 mit größerem Durchmesser. Das Rollenträgerteil befindet sich dabei mit dem Teil in Überdeckung mit dem Nockenring 9, das den ersten Stufenbohrungsteil 14 trägt. Zwischen dem ersten Stufenbohrungsteil 14 und dem Stufenbohrungsteil 15 wird eine Schulter 12 gebildet, die in Anlage an die innen liegende Stirnseite 17 des Deckelteils 2 kommt. Diese Stirnseite begrenzt einen zylindrischen Führungsteil 18 des Deckelteils 2, der koaxial zur Achse der Antriebswelle 8 vom Deckelteil 2 nach innen in den Pumpeninnenraum ragt. Seine Mantelfläche 19 dient als Führung für den Rollenträgerteil 13, in dessen zweiten Stufenbohrungsteil 15 der zylindrische Führungsteil 18 eintaucht. Zur axialen Sicherung ist in der Mantelfläche 19 eine Ringnut 20 vorgesehen, in die ein Zapfen 21 ragt, der sich am Ende eines Betätigungsarmes 22 befindet, der in eine radiale Durchgangsbohrung 23 in den Rollenträgerteil 13 gesteckt ist. An dieser Stelle ist der Rollenträgerteil 13 verstärkt ausgeführt und weist ein Sicherungselement zum Beispiel in Form einer Stiftschraube 24 auf, mit der der Betätigungsarm axial und radial in der Durchgangsbohrung gesichert ist. Der Betätigungsarm ragt mit seinem anderen Ende durch einen Durchbruch 25 im zylindrischen Teil 3 des topfförmigen Gehäuseteils nach außen. An dieser Stelle ist mit dem Gehäuse der Kraftstoffeinspritzpumpe ein hydraulischer Stellmotor 16 verbunden, der einen Stellkolben 27 aufweist, mit dem der Betätigungsarm 22 gekoppelt ist.

Im Bereich des ersten Stufenbohrungsteils 14 weist wie aus Figur 3 ersichtlich das Rollenträgerteil 13 radiale Bohrungen 29 auf, in denen tassenförmige Rollenstößel 30 geführt sind, die in bekannter Weise radial außen liegend eine Aufnahme für eine Rolle 31 haben, die auf der Nockenbahn 11 zum Ablauf kommt. Auf der anderen Seite ist auf der Innenseite des tassenförmigen Rollenstößels eine Druckfeder 32 vorgesehen, die sich an einem innen liegenden radial an den Rollenträgerteil 13 anschließenden Kolbenträgerteil 33 abstützt. Der Kolbenträgerteil ist als Ringelement ausgebildet und wird mit seiner Innenbohrung auf einem Verteiler 35 geführt. In dem Kolbenträgerteil 33 sind ebenfalls Radialbohrungen 36 vorgesehen, in denen Pumpenkolben 37 geführt sind. Diese sind in gleicher Anordnung und Verteilung am Kolbenträgerteil 33 vorgesehen, wie es Rollen auf dem Rollenträgerteil 13 gibt. Das Ende der Kolben ist durch einen Federteller 38 mit dem Rollenstößel 30 gekoppelt.

Zwischen dem Kolbenträgerteil 33 und dem Rollenträgerteil 13 ist eine Verbindung vorgesehen, die im ausgeführten Beispiel als ein Kupplungsarm 39 ausgeführt ist in Form eines radial im Bereich des ersten Stufenbohrungsteils 14 in den Rollenträgerteil 13 eingepreßten oder eingeschraubten Stiftes, der mit einem sphärisch ausgebildeten Kopf 40 in eine entsprechend dem Kopf angepaßte Ausnehmung 41 am Umfang des Kolbenträgerteils 33 ragt.

Der Verteiler 35 schließlich ist in einem Verteilerzylinder 42 geführt, der sich koaxial zur Achse der Antriebswelle 8 im Deckelteil 2 befindet. Auf dem aus diesem Verteilerzylinder 42 herausragenden Ende des Verteilers ist der Kolbenträgerteil 33 gelagert, jenseits dem am äußersten Ende die Kupplung des Verteilers mit der Antriebswelle 8 vorgesehen ist. Dazu weist der Verteiler am Ende einen Bund 44 auf, der zum Beispiel durch einen am Verteilerende befestigten Ring gebildet werden kann. Dieser Bund 44 weist an seiner Mantelfläche eine durchgehende Längsnut 45 auf und daneben eine nicht durchgehende Längsnut 49 auf, die sich zum Deckelteil 2 hin öffnet. In diese nicht durchgehende Längsnut ist ein radial von der Antriebswelle abstehender Stift 46 mit einem sphärisch gebildeten Kopf 47 eingerastet, wobei die Rastung dadurch gesichert ist, daß zwischen dem Ende des Verteilers und der Antriebswelle 8 eine Druckfeder 48 eingespannt ist. Die Kupplung des Verteilers 35 mit der Antriebswelle 8 erfolgt dabei so, daß der Verteiler zunächst so gedreht wird, daß der Kopf 47 durch die durchgehende Längsnut 45 hindurchgeführt werden kann und nachdem der Bund 44 sich auf der Seite der Druckfeder 48 des Kopfes 47 befindet, wird der Verteiler gedreht, so daß der Kopf 47 in die nicht durchgehende Nut 49 einrasten kann.

Dies ermöglicht eine sehr einfache Montage des Verteilers, der zu diesem Zweck durch den Verteilerzylinder 42 von außerhalb der Kraftstoffeinspritzpumpe eingeführt wird und dann durch einfache Drehung mit der Antriebswelle 8 gekoppelt wird. Dazu weist der Außendurchmesser des Bundes 44, wie zum Beispiel auch in Figur 2 deutlich gezeigt, eine Größe auf, die kleiner oder höchstens gleich groß ist wie der Durchmesser des Verteilerzylinders 42. Vorteilhaft kann zwischen dem Verteilerende und der Druckfeder 48 noch eine Führungskapsel 50 vorgesehen werden, die mit ihrer geschlossenen Stirnseite zur Anlage an die Stirnseite des Verteilerendes kommt und mit ihrem Mantel in eine axiale Bohrung 51 in der Antriebswelle 8 taucht und dort die Druckfeder 48 einschließt.

Diese Kupplungsart über den sphärisch ausgebildeten Kopf 47 gewährleistet auch, daß Fluchtungsfehler ausgeglichen werden, ohne daß die Führung des Verteilers in dem Verteilerzylinder 42 belastet wird. Vorteilhaft kann der Verteiler auch zu Wartungszwecken ohne vollständige Demontage der Kraftstoffeinspritzpumpe entfernt werden.

Der Verteiler weist auf seiner Mantelfläche eine Ringnut 53 auf, wie auch der Figur 2 zu entnehmen ist. Diese befindet sich in der Ebene der Kolbenachsen bzw. der Nockenbahnmittelebene und ist mit Längsnuten verbunden, die als Füllnuten 54 ausgebildet in Abständen um den Umfang des Verteilers verteilt angeordnet sind und mit Füllbohrungen 55 bei der Drehung des Verteilers in Verbindung bringbar sind, die im Kolbenträgerteil 33 vorgesehen sind. Die Füllöffnungen der Füllbohrungen 55 sind im Bereich der Füllnuten 54 vorzugsweise rechteckig ausgebildet und verbinden unter Bildung einer Fülleitung die Ringnut 53 mit dem Pumpeninnenraum 6, wenn die Füllnuten in Überdeckung mit den Füllöffnungen sind. Die Ringnut 53 stellt dabei einen Teil des Pumpenarbeitsraumes dar, der ferner noch durch das von den Kolben zur Ringnut 53 hin freigegebene Teil der Radialbohrungen 36 gebildet wird. Der Pumpeninnenraum 6 wird in an sich bekannter Weise durch eine Kraftstofförderpumpe 57 mit Kraftstoff versorgt; die in bekannter Weise im Innern des Kraftstoffeinspritzpumpengehäuses angeordnet ist und Kraftstoff aus einem Kraftstoffvorrat 58 wie im hydraulischen Schaltplan gemäß Figur 5 dargestellt in den Innenraum 6 fördert, wobei der sich dort bildende Druck wegen der zur Drehzahl der Kraftstoffeinspritzpumpe synchronen Antriebsdrehzahl der Kraftstofförderpumpe 57 drehzahlabhängig ist, wobei zusätzlich noch parallel zur Kraftstofförderpumpe ein Drucksteuerventil 59 geschaltet ist. Dieser drehzahlabhängige Druck wird vor allen Dingen zur Steuerung der Spritzbeginnverstellung bzw. der Verdrehung des Rollenträgerteils 13 über den Stellmotor 16 benötigt.

Vom Pumpenarbeitsraum bzw. der Ringnut 53 führt ein Kanal 60 zu einer Verteileröffnung 61, die in Form einer Längsnut umfangsseitig am Verteiler im Bereich des Verteilerzylinders 42 vorgesehen ist. In der durch die Verteileröffnung gehenden Radialebene gehen vom Verteilerzylinder 42 Druckkanäle 62 ab, die entsprechend der Zahl und Folge der zu versorgenden Zylinder der Brennkraftmaschine am Umfang des Verteilers bzw. des Verteilerzylinders angeordnet sind. Die Druckkanäle führen zum Beispiel über ein Druckventil 56 zu stirnseitigen Anschlüssen von Einspritzleitungen 63 (siehe Figur 5), die mit Einspritzdüsen 64 verbunden sind.

Die Verteileröffnung steht ferner mit einem Ringraum 65 in Verbindung, der zwischen der Mantelfläche des Verteilers und dem Verteilerzylinder 42 gebildet wird. Dies erfolgt zum Beispiel durch eine Ringnut in der Mantelfläche des Verteilers. Von dem Ringraum 65 führt ein Entlastungskanal 66 zu einem elektrisch gesteuerten Ventil 67, das stirnseitig auf dem Deckelteil 2 der Kraftstoffeinspritzpumpe befestigt ist und dabei ringsum von den Druckanschlüssen der Einspritzleitungen 63 umgeben ist. Auf dieser Seite ist auch in Form eines Stopfens 68 ein Verschluß des Verteilerzylinders 42 vorgesehen, der zugleich als axiale Begrenzung des Verteilers dient.

Das elektrisch gesteuerte Ventil 67 ist von der Bauart, wie sie in der deutschen Patentanmeldung DE-A-3 523 536 offenbart ist. Es können aber auch andere Ventile zur Anwendung kommen, wobei jedoch das vorgenannte Ventil besonders vorteilhaft ist. Es weist ein Schließglied auf, das als Nadelventil 70 ausgebildet ist, das dicht in einer Bohrung 71 geführt ist. Die Achse des Nadelventils liegt dabei koaxial zur Achse des Verteilers, wenigstens aber parallel dazu. Stirnseitig weist das Nadelventilschließglied eine kegelförmige Dichtfläche 72, das mit einem ebenso geformten Ventilsitz 73 zusammenarbeitet. Das Nadelventil hat ferner eine ringförmige Ausnehmung im Bereich eines Ventilraumes 69, der unmittelbar über den Entlastungskanal 66 mit dem Ringraum 65 verbunden ist. Der Ventilraum 69 mündet bei abgehobenem Nadelventilschließglied über dem kegelförmigen Sitz 73 in einen axial abführenden Teil 66a des Entlastungskanals, der dann über den Deckelteil 2 zur Saugseite der Kraftstoffeinspritzpumpe oder zum Pumpeninnenraum 6 führt, der hier als Entlastungsraum dient. Aufgrund der beschriebenen Gestaltung ist das Ventilschließglied 70 in Schließstellung druckausgeglichen, kann also mit geringen Magnetkräften schnell geöffnet werden, so daß der Pumpenarbeitsraum über den Kanal 60, die Verteileröffnung 61, den Ringraum 65 und den Entlastungskanal 66 schnell entlastet werden kann. Dabei unterstützt der vom Pumpenarbeitsraum her anstehende Druck die Öffnungsbewegung des Nadelventilschließglieds 70 nach anfänglichem Öffnungshub. Dadurch wird ein sehr schnelles Öffnen erreicht und ein exakter Zeitpunkt des Kraftstofförderendes.

Wird die Antriebswelle 8 angetrieben, so wird der Nockenring in Rotationsbewegung versetzt und zugleich laufen die Rollen 31 auf der Nockenbahn 11 ab. Dabei wird eine hin- und hergehende Bewegung der Pumpenkolben 37 erzeugt, die über die Längsnuten 54 und die Füllbohrungen 55 Kraftstoff ansaugen, bei ihrer nach außen gehenden Bewegung entlang einer rückwärtigen Nockenflanke, so daß, wenn sich die Rollen 31 im Nockengrund der Nockenbahn befinden, der Pumpenarbeitsraum komplett mit Kraftstoff gefüllt ist. Beim anschließenden Pumpenkolbenförderhub, bei dem die Rollen über die ansteigende, vorlaufende Nockenflanke nach innen bewegt werden, wird der Kraftstoff im Arbeitsraum unter Hochdruck über eine der Druckleitungen 62 zu einem der Einspritzventile gefördert, solange nicht der Entlastungskanal 66 durch das elektrisch gesteuerte Ventil 67 geöffnet ist. Mit dem Öffnen des Entlastungskanals wird dann aber der Pumpenarbeitsraum schlagartig entlastet, so daß keine Kraftstofförderung unter Hochdruck mehr erfolgen kann und der Einspritzhub beendet ist.

Die Pumpenkolben sind im Kolbenträgerteil 33 jeweils so angeordnet, daß sich die beim Förderhub auftretenden Kräfte ausgleichen. Das heißt, werden nur zwei Pumpenkolben verwendet, so liegen diese diametral gegenüber, bei mehreren Pumpenkolben liegen diese in gleichen Winkelabständen um den Verteiler herum verteilt. Damit aber wird der Kolbenträgerteil von keinen durch den Pumpenkolbenantrieb bewirkten Kräften beaufschlagt, so daß er sich ohne Behinderung frei schwimmend auf dem Umfang des Verteilers bewegen kann. Insbesondere wird auf diese Weise ein Klemmen des Kolbenträgerteils 33 vermieden. Dieser stellt nun ebenfalls ein im wesentlichen feststehendes Teil des Pumpenkolbenantriebs dar, wie auch der Rollenträgerteil 13, mit dem er Fluchtungsfehler ausgleichend über den Kupplungsarm 39 gekoppelt ist.

Bei der zuvor beschriebenen Arbeitsweise der Kraftstoffeinspritzpumpe ist das als Magnetventil 67 ausgeführte elektrisch gesteuerte Ventil bei Beginn des Förderhubs der Pumpenkolben geschlossen und wird erst zur Bestimmung des einspritzwirksamen Förderhubs geöffnet. Diese Arbeitsweise erlaubt zunächst eine Änderung des Förderbeginns in bezug auf die Antriebsdrehzahl der Antriebswelle 8. Der Vorteil dieser Anordnung besteht aber vor allen Dingen darin, daß die Höhe der Nocken bzw. die Länge der Nockenflanken optimal für die Bemessung der Kraftstoffeinspritzmenge ausgenutzt werden können, so daß eine relativ hohe Pumpenkolbenförderzahl pro Umdrehung der Antriebswelle 8 durchgeführt werden kann. Mit zunehmender Zahl der zu versorgenden Zylinder der Brennkraftmaschine wird die zur Verfügung stehende Nockenlänge bzw. Nockenamplitude geringer. Es ist dabei zu berücksichtigen, daß die Nocken nicht beliebig steil ausgeführt werden können aufgrund von Pressungen und dynamischen Verhalten des Nockenkontaktes mit der Rolle 31. Dabei spielt insbesondere auch noch die Drehzahl eine Rolle, mit der die Kraftstoffeinspritzpumpe angetrieben wird. Bei geringen Drehzahlen können die Nocken steiler ausgeführt werden. Bei modernen Dieselbrennkraftmaschinen werden aber sowohl sehr hohe Kraftstoffeinspritzdrücke als auch hohe Drehzahlen gefordert verbunden mit einer hohen Zylinderzahl der Brennkraftmaschine. Aus diesem Grund ist die vorbeschriebene Arbeitsweise der Kraftstoffeinspritzpumpe von großem Vorteil, wobei für die Verstellung des Spritzbeginns in anderer Weise Rechnung getragen wird. Der Spritzbeginn erfolgt durch die Verdrehung des Kolbenträgerteils zusammen mit dem Rollenträgerteil, der über den Betätigungsarm 22 bewegt wird. Dieser Betätigungsarm wird durch einen Spritzversteller, dem hydraulischen Stellmotor 16, bekannter Ausgestaltung betätigt.

Dabei hat die gegebene Anordnung den Vorteil, daß die beim Antrieb der Kraftstoffeinspritzpumpe über die Nocken auf die Rollen ausgeübten Kräfte in erster Linie vom Rollenträgerteil aufgefangen werden, das großflächig auf dem zylindrischen Führungsteil 18 geführt ist, an dem die Belastungen abgeleitet werden können. Der innen liegende Kolbenführungsteil, der mit genauer Passung auf dem Verteiler geführt werden muß, um den Pumpenarbeitsraum 53 abzudichten, wird diesen Kräften nicht mehr ausgesetzt, sondern unter Ausgleich von Fluchtungsfehlern kräftefrei nachgeführt. Dabei kann die Innenbohrung 34 des Kolbenträgerteils exakt gefertigt werden, ohne daß Mehrbelastungen zu einem Klemmen zwischen Verteiler und Kolbenträger 33 führen bei der vorgesehenen engen Passung.

In Figur 5 ist der hydraulische Plan der Kraftstoffeinspritzpumpe schematisch dargestellt und es ist dort auch der Spritzverstellerstellmotor 16' gezeigt mit einer alternativen Ausgestaltung 16 dazu in Figur 6. Mit der Förderpumpe 57 wird wie beschrieben im Innenraum 6 der Pumpe ein Druck erzeugt, der sich in Abhängigkeit von der Drehzahl ändert. Dieser Druck gelangt beim Ausführungsbeispiel nach Figur 6 über eine Drosselbohrung 74 im Stellkolben 27 des Spritzverstellers 16 in einen Arbeitsraum 75, der vom Stellkolben 27 in einem geschlossenen Zylinder 76 eingeschlossen wird. Auf der anderen Seite ist der Stellkolben 27 von einer Rückstellfeder 77 belastet, gegen die entsprechend dem im Arbeitsraum 75 befindlichen Druck der Stellkolben mehr oder weniger weit verschoben wird und dabei den Betätigungsarm 22 in bekannter Weise verstellt. Der Steuerdruck im Arbeitsraum 75 kann sich nun entweder in direkter Abhängigkeit vom Kraftstoffdruck im Pumpeninnenraum 6, also drehzahlabhängig ändern. Dabei wird mit zunehmender Drehzahl der Rollenträgerteil 13 verdreht, so daß die Rollen 31 zu einem relativ früheren Zeitpunkt der Antriebswellenrotation nach innen bewegt werden und somit der Kraftstoffeinspritzbeginn auf früh verlegt wird. Der Steuerdruck kann aber auch in Abhängigkeit von anderen Parametern geändert werden oder zusätzlich ergänzend zur Drehzahlabhängigkeit beeinflußt werden. Dies geschieht in vorteilhafter Weise durch ein Magnetventil 78, das in einer Entlastungsleitung 79 sitzt, die aus dem Spritzverstellerarbeitsraum 75 abführt. Dieses Ventil kann analog, vorzugsweise aber getaktet betätigt werden, wobei das Tastverhältnis oder der Öffnungsgrad in Abhängigkeit von Betriebsparametern über eine hier nicht weiter dargestellte elektronische Steuerung 83 gesteuert wird. Dabei kann insbesondere auch der Warmlauf der Brennkraftmaschine berücksichtigt werden. Es ist aber auch schon vorgeschlagen worden, zur Beeinflussung des dynamischen Verhaltens zum Beispiel bei schneller Lastaufnahme eine Veränderung des Einspritzbeginns zu bewirken. Auch solche Maßnahmen können hier in einfacher Weise vorgenommen werden.

In Figur 5 ist ein Servospritzversteller gezeigt, der ebenfalls einer bekannten Ausführung entspricht und einen Servoschieber 80 aufweist, dessen Stellbewegung der Stellkolben 27' folgt. Wird der Schieber 80 ausgelenkt in Folge einer Änderung des Druckes im Pumpeninnenraum 6, so steuert er entweder eine Verbindung zwischen dem Pumpeninnenraum 6 und dem Arbeitsraum 75 oder eine Verbindung zwischen dem Arbeitsraum 75 und einem Entlastungsraum 81. Diese Verbindungen bestehen solange, bis der Stellkolben 27' aufgrund der Änderung des Druckes im Arbeitsraum 75 so weit gegen seine Rückstellfeder 82 verstellt wird, bis die vom Schieber 8 geöffnete Verbindungsöffnung wieder geschlossen ist. Während mit dem Ausführungsbeispiel nach Figur 5 lediglich eine gesteuerte Verstellung des Rollenträgerteils 13 möglich ist, kann mit der Ausführungsvariante nach Figur 6 eine exakte Steuerung des Kolbenträgerteils 13 erfolgen, indem der das Magnetventil 78 steuernden elektronischen Steuerung 83 eine Rückmeldung des Einspritzbeginns zugeführt wird und der tatsächliche Einspritzbeginn aufgrund dieser Rückmeldung im Vergleich mit dem vorgegebenen Sollwert geregelt wird. Zur Rückmeldung ist wie in Figur 5 und auch der Figur 2 entnehmbar ein Druckgeber 84 vorgesehen, der über eine Stichbohrung 85 zum Beispiel mit dem Ringraum 65 verbunden ist. An dieser Stelle kann der im Pumpenarbeitsraum entstehende Druck exakt als Druckanstieg ermittelt werden und mit dieser Druckflanke ein Steuersignal für eine entsprechende Verarbeitung durch die Steuerung 83 erzeugt werden. Der Druck kann natürlich auch an anderen Stellen abgenommen werden, vorteilhaft bietet sich bei der vorgegebenen Konstruktion aber diese Stelle an. Dem geregelten Spritzbeginn wird dann das Spritzende, der Öffnungszeitpunkt des elektrisch gesteuerten Ventils 67 unter Berücksichtigung der jeweiligen Einspritzmenge nachgeführt.

Eine Variante zu dem obenbeschriebenen Funktionsprinzip besteht darin, daß der Spritzzeitpunkt durch Verdrehen des Rollenträgerteils 13 grob vorgesteuert wird, also in Abhängigkeit von zum Beispiel der Drehzahl und daß eine Feinsteuerung des Spritzbeginns dadurch erzielt wird, daß auch der Schließzeitpunkt des elektrisch gesteuerten Ventils 67 gesteuert wird. Auf diese Weise kann nach einem anfänglichen Förderhub des Pumpenkolbens bei seiner Bewegung aus dem Nockengrund heraus zunächst der Entlastungskanal 66 geöffnet sein und erst zu einem durch den Soll-Ist-Vergleich in der Steuerung 83 ermittelten Zeitpunkt durch das Magnetventil 67 geschlossen werden. Ab diesem Zeitpunkt erfolgt dann die Förderung der Pumpenkolben unter Hochdruck bis durch Wiederöffnen des Entlastungskanals die Einspritzdauer beendet wird. Dies hat den Vorteil, daß durch die Regelung keine großen Regelhübe ausgeführt werden müssen, da die Grobverstellung bereits auf mechanischem Weg erfolgt.

Eine weitere mögliche Variante der Mengen- und Einspritzzeitpunktsteuerung besteht natürlich darin, daß wie bei der deutschen Patentanmeldung DE-A-3 523 536 angegeben, der Spritzbeginn bei nicht veränderter Drehstellung des Rollen- bzw. Kolbenträgerteils durch Schließen des Magnetventils gesteuert wird und die Spritzdauer durch den Punkt des Wiederöffnens des Magnetventils.

Zu der konstruktiven Ausführung, wie sie durch die Figur 1 gegeben ist, zeigt die Figur 2 eine Ausführungsvariante, bei der der als am Verteilerende befestigte Ring ausgeführte Bund 44 beim Ausführungsbeispiel nach Figur 1 durch einen angeformten Bund ersetzt wird. Weiterhin ist im Ausführungsbeispiel nach Figur 2 eine verbesserte Befestigung des Betätigungsarmes 22 am Rollenträgerteil 13 vorgesehen. Hier weist der Betätigungsarm 22' an seinem zum zylindrischen Führungsteil 18 weisenden Ende eine Abplattung 87 auf, die zum Beispiel durch eine Teilabfräsung hergestellt wird. Die Abplattung verläuft über einen Teil der Länge der radialen Durchgangsbohrung 23 im Rollenträgerteil 13' und dient mit seinem Ende 88 als Tiefenanschlag, an dem ein quer durch den Rollenträgerteil 13' geführter Bolzen 89 zur Anlage kommt. Der Rollenträgerteil 13' ist ferner im Bereich des Bolzens 89 mit einem Schlitz 90 versehen, der bis in die Radialbohrung 23 reicht, so daß mit dem Bolzen, der als Schraubbolzen ausgeführt ist, der Betätigungsarm 22' in der Raidalbohrung 23 festgeklemmt werden kann. Eine axiale Sicherung des Betätigungsarmes 22' kann aber auch durch die Eintauchtiefe des Zapfens 21 in die Ringnut 20 gewährleistet werden. Mit dieser Ausführung ist eine sichere und starre Verbindung zwischen dem Spritzverstellmotor 16 und dem Rollenträgerteil 13' gewährleistet, der Betätigungsarm 22' kann mit großem Durchmesser ausgeführt werden und ist einfach in der Herstellung.

In Figur 2 ist ferner noch ein Ring 91 vorgesehen, der in den zylindrischen Teil 3 eingesetzt ist und sich zwischen dem offenen Ende des zylindrischen Teils und dem Nockenring 9 befindet. Der Durchmesser des Ringes ist kleiner oder höchstens gleich dem Durchmesser des Nockengrunds und hat die Aufgabe, die Montage der Kraftstoffeinspritzpumpe zu erleichtern. Bei der Montage erfolgt im topfförmigen Teil zunächst der Einbau von Dichtungen, Förderpumpe 57 und Antriebswelle 8 zusammen mit dem Nockenring 9. Mit dem Deckelteil 2 zusammen werden Rollenträgerteil 13' und Kolbenträgerteil 33 vormontiert und zur Einführung in den zylindrischen Teil 3 des Gehäuses der Kraftstoffeinspritzpumpe die Rollen gegen die rückstellenden Kräfte der Federn 32 zusammengedrückt derart, daß die Rollen zusammen mit dem Deckelteil 2 in den Ring 91 eingeführt werden können. Daraufhin braucht der vormontierte Verband nur noch weiter eingeschoben werden, bis die Rollen in den Radialbereich der Nockenbahn 11 gelangt sind. Dazu war zuvor eine Ausrichtung der Rollen nach den Nockengründen der Nockenbahn 11 notwendig. Anschließend an diesen Montagegang kann nachträglich der Verteiler eingesetzt werden, wie bereits zu Figur 1 beschrieben, der Verteilerzylinder 42 geschlossen werden und das Magnetventil 67 aufgesetzt werden. Auf diese Weise braucht das Gehäuse der Kraftstoffeinspritzpumpe nur zweiteilig ausgeführt werden, wobei der Montagering 91 die Entfernung zwischen dem offenen Ende des zylindrischen Teils des Einspritzpumpengehäuses und dem Nockenring 9 überbrückt. Der Ring kann eingegossen sein oder gemäß Figur 3 als Klemmring eingesetzt werden. In Figur 3 ist die Pumpe im Schnitt einerseits in der Ebene der Kolben und andererseits in einer zum Ring 91 hin versetzten Ebene gezeigt.

In Figur 4 ist eine Ausführungsvariante vom Ausführungsbeispiel nach Figur 1 gezeigt, bei der eine Verteilerpumpe der Radialkolbenpumpenbauart gezeigt ist, die als Nockenantrieb einen im wesentlichen feststehenden Nockenring 93 aufweist, der nun wiederum durch einen Spritzversteller in seiner Relativstellung zu einem festen Punkt, der in der Frequenz der Antriebsdrehzahl der Antriebswelle wiederkehrt, verstellbar ist. Der beim Ausführungsbeispiel nach Figur 1 vorgesehene Rollenträger 13 ist hier einstückig mit der Antriebswelle 8' verbunden, die ebenfalls zum Pumpeninnenraum 6 hin sich topfartig erweitert und mit diesem topfartigen Teil den Rollenträgerteil 13'' bildet. Dieser ist mit einem Teil 94 seiner Umfangsmantelfläche analog zum rotierend angetriebenen Teil beim Ausführungsbeispiel nach Figur 1 am zylindrischen Innenmantel 95 des Gehäuses 1' geführt. Als Kolbenträgerteil 33' ist nun in Abwandlung zum Ausführungsbeispiel nach Figur 1 das in den Pumpeninnenraum 6 ragende Ende des Verteilers 35' ausgeführt, dessen Füllnuten 54' nun mit Füllöffnungen von Füllbohrungen 55' zusammenarbeiten, die im Deckelteil 2' angeordnet sind und mit dem Pumpeninnenraum 6 verbunden sind. Die Ankoppelung des Verteilers 35' mit der Antriebswelle 8' bzw. des Kolbenträgerteils 33' mit dem Rollenträgerteil 13'' erfolgt nun durch einen radial in den Rollenträgerteil 13'' eingesetzten Mitnahmebolzen 97, der in eine Ausnehmung 98 am Umfang des Kolbenträgerteils 33' mit einem kugelförmigen Kopf 99 einrastet. Die Verbindung kann dabei analog zur Verbindung zwischen Antriebswelle 8 und Verteiler im Ausführungsbeispiel 1 ausgeführt sein. Durch eine Druckfeder 100, die sich an der Antriebswelle 8' abstützt, wird auch in diesem Fall der Verteiler axial belastet und der Kontakt des Kopfes 99 in der zum Deckelteil 2' hin offenen Ausnehmung 98 gesichert. Auch mit dieser Einrichtung können Fluchtungsfehler in einfacher Weise ausgeglichen werden, so daß die dichte Passung des Verteilers 35' im Verteilerzylinder nicht durch Querbelastungen zu einer Funktionsbehinderung führt. Der stabile, der Antriebswelle 8' zugeordnete Rollenträgerteil 134 nimmt dabei die hohen Kräfte auf, wobei er zusätzlich noch radial geführt ist, um irgendwelche Kippmomente von der Antriebsseite der Antriebswelle 8' auszugleichen und es wird somit der Verteiler lediglich querkräftefrei nachgeführt.

Eine zusätzliche Ausführungsform ist der Figur 7 zu entnehmen, die sich auf eine Zwangskühlung des Magnetventils 67 bezieht. Hier wird das von dem tassenförmigen Rollenstößel 30 auf der Seite der Rückstellfedern 32 in der Radialbohrung 29 eingeschlossene Volumen als Pumpenarbeitsraum 101 verwendet, der über eine Saugleitung 102, die parallel zum Verteilerzylinder 42 zur außen liegenden Stirnseite des Deckelteils 2 führt, mit dem Innenraum des Magnetventils 67 verbunden ist. Die an der Stirnseite ausmündende Saugleitung 102 geht in das Gehäuse 103 des Magnetventils 67 über, wo ein zum Pumpenarbeitsraum öffnendes Rückschlagventil 104 vorgesehen ist. Die Leitung führt dann weiter zu einem Innenraum 106 des Magnetventils, welcher Innenraum gegenüber dem Ventilraum 69 abgeschlossen ist und die hier nicht weiter gezeigte Magnetwicklung des Magnetventils enthält. Der Innenraum 106 ist weiterhin über die weiterführende Saugleitung 102' mit dem Pumpeninnenraum 6 verbunden. Bei einem Auswärtshub der Rollen 31 bzw. der tassenförmigen Rollenstößel 30 wird nun über die Saugleitung 102, das Rückschlagventil 104, dem Innenraum 106 des Magnetventils und der weiterführenden Saugleitung 102' Kraftstoff aus dem Pumpeninnenraum 6 angesaugt, wodurch der Innenraum des Magnetventils 67 gespült und zugleich gekühlt wird. Beim anschließenden Förderhub der Pumpenkolben im Laufe der Einwärtsbewegung der Rollenstößel 30 wird das Rückschlagventil 104 verschlossen und der Pumpenarbeitsraum entweder über ein weiteres Rückschlagventil oder eine Drosselöffnung entlastet. Diese Ausführungsvarianten sind in der Zeichnung nicht dargestellt. Diese Ausführung hat den Vorteil, daß keine zusätzliche Kühlpumpe für das Magnetventil vorgesehen werden muß. Die Funktion des Magnetventils wird durch die Spülung nicht beeinflußt, da die Spülung jeweils in den Saugphasen der Pumpenkolben erfolgt, in denen das Magnetventil nicht geschaltet wird. Die Spülung und Kühlung erfolgt ferner in Abhängigkeit von der Antriebsdrehzahl der Kraftstoffeinspritzpumpe bzw. in Abhängigkeit von der Zahl der Betätigungen des Magnetventils und damit in Abhängigkeit von der dort anfallenden Wärme.

Mit der hier dargestellten vorteilhaften Pumpenausführung ergibt sich eine sehr kompakt bauende Kraftstoffeinspritzpumpe, die auch für hohe Einspritzdrücke und für hohe Drehzahlen tauglich ist und zugleich auch eine hohe Anzahl von Zylindern einer Brennkraftmaschine versorgen kann. Die Pumpe hat weiterhin den Vorteil, daß sie sehr exakt die Kraftstoffeinspritzmenge und auch den Spritzbeginn steuern kann unter Anwendung einer elektronischen Steuerung und mit geringem Aufwand.

**Patentansprüche**

1. Kraftstoffeinspritzpumpe für Brennkraftmaschinen mit wenigstens zwei Pumpenkolben (37), die durch einen Nockenantrieb in eine hin- und hergehende Pumpenbewegung versetzt werden und einen Pumpenarbeitsraum (53) begrenzen, der ständig mit einer Verteileröffnung (61) am Umfang eines synchron zum Pumpenkolben- und Nockenantrieb angetriebenen Verteilers (35) verbunden ist, über welche Verteileröffnung der Pumpenarbeitsraum (53) während eines jeweiligen Pumphubes der Pumpenkolben (37) mit je einem von mehreren Druckkanälen (62), die über Einspritzleitungen (63) mit den Einspritzstellen (64) der Brennkraftmaschine verbindbar sind, verbunden ist, der ferner über eine Fülleitung (54, 55) während eines jeweiligen Saughubes der Pumpenkolben (37) mit einem Kraftstoffvorrat (6, 58) verbunden ist und der über ein elektrisch gesteuertes Ventil (67) während eines Teiles des Pumphubes der Pumpenkolben zur Steuerung des einspritzwirksamen Pumpenkolbenhubes mit einem Entlastungsraum (6) verbindbar ist, wobei der Nockenantrieb aus einem wenigstens im wesentlichen feststehenden Teil (13, 33; 93) und einem rotierend angetriebenen Teil (9; 13'', 33') besteht, von denen einer eine Nockenbahn (11) mit in einer radialen Ebene zur Achse des rotierenden Teils liegenden Nocken aufweist und der andere Teil einen Kolbenträgerteil (33, 33') aufweist, in dem radiale Bohrungen (36) vorgesehen sind, in denen die Pumpenkolben (37) geführt werden, die unter Zwischenschaltung von in radialen Führungsbohrungen (29) in einem Rollenträgerteil (13) geführten Rollen (31) mit der Nockenbahn (11) zusammenwirken und in Folge der Relativbewegung des feststehenden Teils des Nockenantriebs zum rotierend angetriebenen Teil zueinander durch Ablauf der Rollen (31) auf der Nockenbahn (11) bewegt werden und mit einer Kupplung (46, 47, 49), über die der als eine koaxial zum rotierend angetriebenen Teil in einem Verteilerzylinder (42) geführte Welle ausgebildete Verteiler (35) mit dem rotierend angetriebenen Teil (8) gekoppelt ist, dadurch gekennzeichnet, daß der Kolbenträgerteil (33, 33') über einen radial zur Achse des rotierend angetriebenen Teils (8, 8') angeordneten Kupplungsarm (39, 97) mit dem die Führungsbohrungen (36) der Rollen (31) aufnehmenden Rollenträgerteil (13, 13'') gekoppelt ist, wobei der Kupplungsarm (39, 97) mit dem einen der Trägerteile (13, 13'' oder 33, 33') starr verbunden ist und an seinem Ende einen mit einer Kugeloberfläche versehenen Kopf (40, 99) aufweist, der in eine Ausnehmung (41, 98) am anderen der Trägerteile eingepaßt ist und über den Fluchtungsabweichungen in radialer und axialer Richtung ausgeglichen werden.

2. Kraftstoffeinspritzpumpe nach Anspruch 1, dadurch gekennzeichnet, daß die Nockenbahn (11) auf dem rotierend angetriebenen Teil des Nockenantriebes (8, 9) angeordnet ist und auf dem Verteiler (35) der Kolbenträgerteil (33) als Ringelement drehbar gelagert ist und vom Rollenträgerteil (13) umgeben und mit diesem gekoppelt ist.

3. Kraftstoffeinspritzpumpe nach Anspruch 1, dadurch gekennzeichnet, daß die Nockenbahn (11) auf dem im wesentlichen feststehenden Teil (93) angeordnet ist, der Verteiler auf einem aus dem Verteilerzylinder (42) herausragenden Stück als Kolbenträgerteil (33') ausgebildet ist und über das Kupplungsteil (97) mit dem rotierend angetriebenen, als Rollenträgerteil (13'') ausgebildeten Teil des Nockenantriebs gekoppelt ist.

4. Kraftstoffeinspritzpumpe nach Anspruch 2 oder 3, dadurch gekennzeichnet, daß die Relativstellung des wenigstens im wesentlichen feststehenden Teils des Nockenantriebs zu einem mit der Frequenz der Rotation wiederkehrenden bestimmten Punkt des rotierend angetriebenen Teils des Nockenantriebs änderbar ist.

5. Kraftstoffeinspritzpumpe nach einem der vorstehenden Ansprüche, dadurch gekennzeichnet, daß der Verteiler (35) an seinem dem rotierend angetriebenen Teil (8) zugewandten Ende einen bundartigen Teil (44) aufweist, der auf seiner Mantelfläche eine durchgehende Längsnut (45) und eine nicht durchgehende, zu der dem rotierend angetriebenen Teil (8) abgewandten Seite des bundartigen Teils mündende Ausnehmung (49) aufweist, wobei die durchgehende Längsnut wenigstens die Breite und einen gleich großen oder kleineren radialen Abstand des Nutgrundes zur Achse des Verteilers (35) hat, wie die nicht durchgehende Ausnehmung und zwischen Verteilerende und rotierend angetriebenen Teil (8) eine Druckfeder (48) eingespannt ist, durch die der Verteiler im Einbauzustand mit dem Ende der nicht durchgehenden Ausnehmung (49) in Anlage an einen in diese hineinragenden, mit dem rotierend angetriebenen Teil (8) verbundenen, radialen Kupplungsarm (46) zur Anlage kommt.

6. Kraftstoffeinspritzpumpe nach Anspruch 5, dadurch gekennzeichnet, daß das in die Ausnehmung hineinragende Ende des Kupplungsarmes (46) kugelig geformt ist.

7. Kraftstoffeinspritzpumpe nach Anspruch 5 oder 6, dadurch gekennzeichnet, daß der Durchmesser des bundartigen Teiles (44) kleiner, höchstens gleich groß wie der Durchmesser des Verteilerzylinders (42) ist.

8. Kraftstoffeinspritzpumpe nach Anspruch 5 oder 6, dadurch gekennzeichnet, daß der bundartige Teil (44) als am Ende des Verteilers (35) befestigter Ring ausgebildet ist.

9. Kraftstoffeinspritzpumpe nach einem der vorstehenden Ansprüche, insbesondere nach Anspruch 2 oder 3, dadurch gekennzeichnet, daß der rotierend angetriebene Teil (8, 8') am Außenumfang im Gehäuse der Kraftstoffeinspritzpumpe geführt wird.

10. Kraftstoffeinspritzpumpe nach einem der vorstehenden Ansprüche, insbesondere nach Anspruch 2, dadurch gekennzeichnet, daß der Rollenträgerteil (13) radial im Pumpengehäuse geführt ist.

11. Kraftstoffeinspritzpumpe nach Anspruch 10, dadurch gekennzeichnet, daß das Pumpengehäuse aus einem topfförmigen Teil (1) und einem dieses verschließenden Deckelteil (2) besteht, in dem der Verteilerzylinder (42) und die Druckkanäle (62) angeordnet sind und der ein zylindrisches Führungsteil (18) hat, das koaxial zur Achse des Verteilerzylinders (42) liegt und in den vom Deckelteil mit dem topfförmigen Teil eingeschlossenen Pumpeninnenraum (6) ragt und auf seinem Umfang über einen zweiten Stufenbohrungsteil (15) einer durch den Rollenträgerteil (13) axial durchgehenden Stufenbohrung den Rollenträgerteil radial führt.

12. Kraftstoffeinspritzpumpe nach Anspruch 11, dadurch gekennzeichnet, daß der Rollenträgerteil (13) mit einem Betätigungsarm (22) lösbar starr verbunden ist, der an seinem äußeren Ende mit einem Stellmotor (16) verbunden ist und an seinem anderen, inneren Ende in eine ringförmige Ausnehmung (20) ragt, an der er in axialer Richtung in Anlage ist.

13. Kraftstoffeinspritzpumpe nach Anspruch 12, dadurch gekennzeichnet, daß der Betätigungsarm (22') in einer radialen Durchgangsbohrung (23) am Rollenträgerteil (13') gelagert ist und von seinem innen liegenden Ende her eine Abplattung (87) hat, deren nach außen weisendes Ende (88) als Einstelltiefenanschlag des Betätigungsarmes an eine quer zur Durchgangsbohrung, diese schneidend angeordnete Klemmschraube (89) dient, wobei der Rollenträger (13') von der klemmschraubenseitigen Stirnseite her über wenigstens ein Teil der Länge der Durchgangsbohrung geschlitzt ist.

14. Kraftstoffeinspritzpumpe nach Anspruch 12 oder 13, dadurch gekennzeichnet, daß der Betätigungsarm (22) an seinem in die ringförmige Ausnehmung (20) ragenden Ende ballig ausgeführt ist.

15. Kraftstoffeinspritzpumpe nach einem der vorstehenden Ansprüche, dadurch gekennzeichnet, daß der Pumpenarbeitsraum (53) ständig mit einem zwischen Verteiler (35) und Verteilerzylinder (42) gebildeten Ringraum (65) verbunden ist, von dem ein im Gehäuse verlaufender Entlastungskanal (66) zum elektrisch gesteuerten Ventil (67) führt.

16. Kraftstoffeinspritzpumpe nach Anspruch 15, dadurch gekennzeichnet, daß das elektrisch gesteuerte Ventil stirnseitig am Einspritzpumpengehäuse und zentral zwischen den rings um den Verteilerzylinder abführenden Druckkanälen (62) angeordnet ist.

17. Kraftstoffeinspritzpumpe nach Anspruch 16, dadurch gekennzeichnet, daß das elektrisch gesteuerte Ventil ein Magnetventil ist, dessen von Magnetkräften gesteuertes Schließglied als druckausgeglichenes Nadelventilschließglied (70) ausgebildet ist, dessen Achse parallel oder koaxial zur Achse des Verteilers (35) liegt und dessen Dichtfläche (72) stirnseitig dem Verteilerende zugewandt, kegelförmig ausgebildet ist und mit einem Ventilsitz (73) zusammenarbeitet, der ventilschließgliedseitig den unmittelbar mit dem Pumpenarbeitsraum (53) verbundenen hochdruckseitigen Teil des Entlastungskanals (66) begrenzt.

18. Kraftstoffeinspritzpumpe nach Anspruch 17, dadurch gekennzeichnet, daß von dem Ringraum (65) eine Bohrung (85) abzweigt, in der ein Druckgeber (84) angeordnet ist.

19. Kraftstoffeinspritzpumpe nach einem der vorstehenden Ansprüche, dadurch gekennzeichnet, daß auf dem Verteiler umfangsseitig Füllnuten (54) vorgesehen sind, die mit Füllöffnungen der Fülleitung (55) beim Saughub der Pumpenkolben (37) verbunden sind und den Pumpenarbeitsraum (53) mit einem im Pumpengehäuse eingeschlossenen Saugraum (6) verbinden.

20. Kraftstoffeinspritzpumpe nach Anspruch 19, dadurch gekennzeichnet, daß die Füllnuten im Bereich des nicht rotierend angetriebenen Kolbenträgerteils angeordnet sind und die Füllöffnungen in dem im Pumpeninnenraum (6) angeordneten Kolbenträgerteil (33) vorgesehen sind.

21. Kraftstoffeinspritzpumpe nach Anspruch 19, dadurch gekennzeichnet, daß die Füllnuten (54') sich im Bereich des Verteilerzylinders (42) befinden, in den die Füllöffnungen münden.

22. Kraftstoffeinspritzpumpe nach einem der vorstehenden Ansprüche, dadurch gekennzeichnet, daß der topfförmige Gehäuseteil (1) einen axial neben dem, die Nockenbahn tragenden Teil zur offenen Seite hin liegenden Ring (91) aufweist, dessen Durchmesser kleiner/gleich dem Durchmesser ist, auf dem der Nockengrund der Nockenbahn (11) liegt.

23. Kraftstoffeinspritzpumpe nach Anspruch 22, dadurch gekennzeichnet, daß der Ring als in dem topfförmigen Gehäuseteil eingesetzter Ring ausgebildet ist.

24. Kraftstoffeinspritzpumpe nach Anspruch 23, dadurch gekennzeichnet, daß der Ring aus Kunststoff besteht.

25. Kraftstoffeinspritzpumpe nach einem der vorstehenden Ansprüche, dadurch gekennzeichnet, daß das elektrisch gesteuerte Ventil (67) ein Magnetventil ist mit einem gegenüber der Hochdruckseite geschlossenen Innenraum (106), in dem die Magnetwicklung des Magnetventils angeordnet ist und die Rollen (31) auf tassenförmigen Rollenstößeln (30) gelagert sind, die dicht in radialen Führungsbohrungen (36) eingepaßt sind und auf der den Rollen abgewandten Seite einen Pumpenarbeitsraum (101) einschließen, der über einen mit einem in Förderrichtung öffnenden Rückschlagventil (104) versehenen Saugkanal (102) mit dem Kraftstoffvorrat verbunden ist, zu dem er über einen Entlastungskanal entlastbar ist, wobei in einem der Kanäle der Ventilinnenraum (106) des Magnetventils (67) liegt.

26. Kraftstoffeinspritzpumpe nach Anspruch 25, dadurch gekennzeichnet, daß das Rückschlagventil (104) in der Saugleitung (102) zwischen Magnetventil (67) und Rollenstößel (30) angeordnet ist.

27. Kraftstoffeinspritzpumpe nach Anspruch 26, dadurch gekennzeichnet, daß der Entlastungskanal ständig über eine Drossel oder ein Rückschlagventil mit dem Kraftstoffvorrat verbunden ist.

28. Kraftstoffeinspritzpumpe nach Anspruch 26, dadurch gekennzeichnet, daß der Entlastungskanal durch ein synchron zum rotierend angetriebenen Teil bewegtes Element im Wechsel geöffnet und geschlossen wird.

29. Kraftstoffeinspritzpumpe nach einem der vorstehenden Ansprüche, dadurch gekennzeichnet, daß das elektrisch gesteuerte Ventil (67) zur Steuerung des einspritzwirksamen Pumpenkolbenförderhubs zu Beginn des Pumphubes der Pumpenkolben (37) geschlossen ist und zur Beendigung des einspritzwirksamen Pumpenförderhubs geöffnet wird, wobei zur Einstellung des Beginns der Kraftstoffhochdruckeinspritzung die Relativstellung des wenigstens im wesentlichen feststehenden Teils des Nockenantriebs zu einem mit der Frequenz der Rotation wiederkehrenden Punkt des rotierend angetriebenen Teils des Nockenantriebs änderbar ist.

30. Kraftstoffeinspritzpumpe nach Anspruch 29, dadurch gekennzeichnet, daß die Verstellung der Relativstellung in Abhängigkeit von wenigstens einem Betriebsparameter, insbesondere von der Drehzahl der Brennkraftmaschine durch den Stellmotor (16) erfolgt.

31. Kraftstoffeinspritzpumpe nach Anspruch 30, dadurch gekennzeichnet, daß der Stellmotor einen gegen Federkraft durch einen Steuerdruck beaufschlagten Stellkolben (27) aufweist.

32. Kraftstoffeinspritzpumpe nach Anspruch 31, dadurch gekennzeichnet, daß der Steuerdruck über einen durch ein elektrisches Ventil (78) gesteuerten Zu- oder Abfluß des vom Stellkolben (27) begrenzten Arbeitsraumes (75), der von einer Druckquelle mit unter Druck stehendem Kraftstoff versorgt wird, veränderbar ist.

33. Kraftstoffeinspritzpumpe nach Anspruch 32, dadurch gekennzeichnet, daß das elektrisch gesteuerte Ventil (78) getaktet betätigt wird mit variablem Tastverhältnis.

34. Kraftstoffeinspritzpumpe nach Anspruch 29 bis 33, dadurch gekennzeichnet, daß die Verstellung der Relativstellung über ein Rückmeldeglied (84) erfaßt wird und nach vorgegebenen Sollwerten geregelt wird und bei der Steuerung des Öffnungspunktes des elektrisch gesteuerten Ventils (67) berücksichtigt wird.

35. Kraftstoffeinspritzpumpe nach Anspruch 29 bis 33, dadurch gekennzeichnet, daß die Verstellung der Relativstellung in Abhängigkeit von Betriebsparametern vorgesteuert wird und durch Steuerung des Schließpunktes des elektrisch gesteuerten Ventils (67) nach Förderhubbeginn der Spritzbeginn geregelt wird und durch den Punkt des Wiederöffnens des elektrisch gesteuerten Ventils das Ende der Einspritzdauer und damit der Einspritzmenge gesteuert oder geregelt wird.

## Claims

1. Fuel injection pump for internal-combustion engines having at least two pump pistons (37) which are set into a reciprocating pumping movement by a cam drive and delimit a pump chamber (53) which is connected permanently to a distributor orifice (61) at the circumference of a distributor (35) driven synchronously with the pump piston drive and cam drive, through which distributor orifice the pump chamber (53) is connected during a respective pump stroke of the pump piston (37) to one of a plurality of pressure ducts (62) which are connectable by injection pipes (63) to the injection point (64) of the internal-combustion engine, which is also connected by a filling pipe (64, 65) during a respective intake stroke of the pump pistons (37) to a fuel supply (6, 58), and which is connectable by an electrically controlled valve (57) during a part of the pump stroke of the pump pistons to a relief chamber (6) in order to control the pump piston stroke which effects the injection, the cam drive comprising an at least substantially stationary element (13, 33; 93) and an element (9; 13'', 33') driven in rotation, one of which exhibits a cam track (11) having cams located in a radial plane to the axis of the rotating element and the other element exhibits a piston support element (33, 33') in which radial bores (36) are provided in which the pump pistons (37) are guided and cooperate with the cam track (11) with interposition of rollers (31) guided in radial guide bores (29) in a roller support element (13) and are moved relative to each other by the rolling of the rollers (31) on the cam track (11) as a consequence of the movement of the stationary element of the cam drive relative to the element driven in rotation, and having a coupling (46, 47, 49) by which the distributor (35), which is constructed as a shaft guided coaxially to the element driven in rotation in a distributor cylinder (42) is connected to the element (8) driven in rotation, characterized in that the piston support element (33, 33') is coupled by a coupling arm (39, 97) arranged radially to the axis of the element (8, 8') driven in rotation to the roller support element (13, 13'') which receives the guide bores (36) of the rollers (31), the coupling arm (39, 97) being connected rigidly to one of the support elements (13, 13'' or 33, 33') and exhibiting at its end a head (40, 99) provided with a spherical surface which is fitted into a recess (41, 98) in the other of the support elements, and through which alignment deviations in the radial and axial direction are compensated.

2. Fuel injection pump according to Claim 1, characterized in that the cam track (11) is arranged on the element of the cam drive (8, 9) which is driven in rotation, and the piston support element (33) is mounted rotatably as an annular element on the distributor (35) and is surrounded by the roller support element (13) and coupled to the latter.

3. Fuel injection pump according to Claim 1, characterized in that the cam track (11) is arranged on the substantially stationary element (93), the distributor is constructed as a piston support element (33') on a part projecting out of the distributor cylinder (42) and is coupled by the coupling element (97) to the element of the cam drive which is driven in rotation, which is constructed as a roller support element (13'').

4. Fuel injection pump according to Claim 2 or 3, characterized in that the position of the at least substantially stationary element of the cam drive relative to a given point, recurring with the frequency of rotation, of the element of the cam drive which is driven in rotation is variable.

5. Fuel injection pump according to one of the previous Claims, characterized in that the distributor (35) exhibits at its end facing the element (8) driven in rotation a collar-like section (44) which exhibits on its envelope surface a continuous longitudinal groove (45) and a non-continuous recess (49) leading to the side of the collar-like element remote from the element (8) driven in rotation, the continuous longitudinal groove having at least the same width and an equal or smaller radial interval of the groove base from the axis of the distributor (35) as the non-continuous recess, and a compression cylinder (48) being tensioned between distributor end and element (8) driven in rotation, whereby the distributor in the installed state comes into abutment by the end of the non-continuous recess (49) with a radial coupling arm (46) projecting into the latter and connected to the element (8) driven in rotation.

6. Fuel injection pump according to Claim 5, characterized in that the angular coupling arm (46) which projects into the recess is of spherical form.

7. Fuel injection pump according to Claim 5 or 6, characterized in that the diameter of the collar-like element (44) is smaller, or at most equal to the diameter of the distributor cylinder (42).

8. Fuel injection pump according to Claim 5 or 6, characterized in that the collar-like part (44) is constructed as a ring fastened to the end of the distributor (35).

9. Fuel injection pump according to one of the previous Claims, particularly according to Claim 2 or 3, characterized in that the element (8, 8') driven in rotation is guided by its outer circumference in the housing of the fuel injection pump.

10. Fuel injection pump according to one of the previous Claims, particularly according to Claim 2, characterized in that the roller support element (13) is guided radially in the pump housing.

11. Fuel injection pump according to Claim 10, characterized in that the pump housing comprises a pot-shaped element (1) and a cover element (2) closing the latter, in which the distributor cylinder (42) and the pressure ducts (62) are arranged and which has a cylindrical guide element (18) which is located coaxially to the axis of the distributor cylinder (42) and projects into the pump inner chamber (6) enclosed by the cover element with the potshaped element, and guides the roller support element radially on its circumference by a second stepped bore element (15) of a stepped bore passing continuously axially through the roller support element (13).

12. Fuel injection pump according to Claim 11, characterized in that the roller support element (13) is connected rigidly and detachably to an actuating arm (22) which is connected by its outer end to a servomotor (16) and projects by its other inner end into an annular recess (20) with which it is in abutment in the axial direction.

13. Fuel injection pump according to Claim 12, characterized in that the actuating arm (22') is mounted in a radial passage bore (23) in the roller support element (13') and has from its internal end a flap (87), the outward pointing end (88) of which serves as a depth adjustment stop of the actuating arm to a clamp screw (89) arranged transversely to and intercepting the passage bore, the roller support (13') being slotted over at least a part of the length of the passage bore on its end face adjoining the clamp screw.

14. Fuel injection pump according to Claim 12 or 13, characterized in that the actuating arm (22) is of convex construction at its end which projects into the annular recess (20).

15. Fuel injection pump according to one of the previous Claims, characterized in that the pump chamber (53) is connected permanently to an annular chamber (65) formed between distributor (35) and distributor cylinder (42), from which a relief duct (66) extending in the housing leads to the electrically controlled valve (67).

16. Fuel injection pump according to Claim 15, characterized in that the electrically controlled valve is arranged on the end face of the injection pump housing and centrally between the pressure ducts (62) leading off all round the distributor cylinder.

17. Fuel injection pump according to Claim 16, characterized in that the electrically controlled valve is a solenoid valve, the closure element of which, controlled by magnetic forces, is constructed as a pressure-compensated needle valve closure element (70), the axis of which is located parallel or coaxially to the axis of the distributor (35) and the sealing surface (72) of which at the end face faces the distributor end, is of conical construction and cooperates with a valve seat (73) which delimits on the valve closure element side the high-pressure side section of the relief duct (66) which is connected directly to the pump chamber (53).

18. Fuel injection pump according to Claim 17, characterized in that a bore (85) in which a pressure transducer (84) is arranged branches from the annular chamber (65).

19. Fuel injection pump according to one of the previous Claims, characterized in that filling grooves (54) are provided circumferentially on the distributor which grooves are connected to filling orifices of the filling pipe (55) during the suction stroke of the pump pistons (37) and connect the pump chamber (53) to an intake chamber (6) enclosed in the pump housing.

20. Fuel injection pump according to Claim 19, characterized in that the filling grooves are arranged in the region of the piston support element not driven in rotation and the filling orifices are provided in the piston support element (33) arranged in the pump inner chamber (6).

21. Fuel injection pump according to Claim 19, characterized in that the filling grooves (54') are located in the region of the distributor cylinder (42) into which the filling orifices lead.

22. Fuel injection pump according to one of the previous Claims, characterized in that the pot-shaped housing element (1) exhibits a ring (91) located axially beside the element supporting the cam track towards the open side, the diameter of which is smaller than/equal to the diameter on which the cam base of the cam track (11) is located.

23. Fuel injection pump according to Claim 22, characterized in that the ring is constructed as a ring inserted into the pot-shaped housing element.

24. Fuel injection pump according to Claim 23, characterized in that the ring is made of plastic.

25. Fuel injection pump according to one of the previous Claims, characterized in that the electrically controlled valve (67) is a solenoid valve having an inner chamber (106) closed towards the high-pressure side, in which the solenoid winding of the solenoid valve is arranged, and the rollers (31) are mounted on cup-shaped roller followers (30) which are fitted fluidtightly into radial guide bores (36) and enclose in the side remote from the rollers a pump chamber (101) which is conntected by an intake duct (102) provided with a non-return valve (104) opening in the delivery direction to the fuel supply, to which it can be relieved through a relief duct, the valve inner chamber (106) of the solenoid valve (67) being located in one of the ducts.

26. Fuel injection pump according to Claim 25, characterized in that the non-return valve (104) is arranged in the intake pipe (102) between solenoid valve (67) and roller follower (30).

27. Fuel injection pump according to Claim 26, characterized in that the relief duct is connected to the fuel supply permanently via a throttle or a non-return valve.

28. Fuel injection pump according to Claim 26, characterized in that the relief duct is opened and closed alternately by an element which is moved synchronously with the element driven in rotation.

29. Fuel injection pump according to one of the previous Claims, characterized in that the electrically controlled valve (67) is closed in order to control the pump piston delivery stroke which effects the injection at the start of the pump stroke of the pump pistons (37) and is opened in order to end the pump delivery stroke which effects the injection, the position of the at least substantially stationary element of the cam drive relative to a point recurring with the frequency of rotation of the element of the cam drive driven in rotation is variable in order to adjust the start of the high-pressure fuel injection.

30. Fuel injection pump according to Claim 29, characterized in that the adjustment of the relative position is effected by the servomotor (16) as a function of at least one operational parameter, particularly of the speed of the internal-combustion engine.

31. Fuel injection pump according to Claim 30, characterized in that the servomotor exhibits a servopiston (27) stressed by a control pressure counter to spring force.

32. Fuel injection pump according to Claim 31, characterized in that the control pressure is variable by an inflow or outflow, controlled by an electrical valve (78), of the chamber (75) delimited by the servopiston (27), which chamber is supplied with pressurised fuel from a pressurised source.

33. Fuel injection pump according to Claim 32, characterized in that the electrically controlled valve (78) is actuated in cadence with a variable duty ratio.

34. Fuel injection pump according to Claims 29 to 33, characterized in that the adjustment of the relative position is detected by an acknowledge element (84) and is regulated according to prescribed desired values and is taken into consideration in the control of the opening point of the electrically controlled valve (67).

35. Fuel injection pump according to Claims 29 to 33, characterized in that the adjustment of the relative position is piloted as a function of operational parameters and the injection start is regulated by controlling the closing point of the electrically controlled valve (67) after the start of the delivery stroke, and the end of the injection period, and therefore of the injection quantity is controlled by the re-opening point of the electrically controlled valve.


**Revendications**

1. Pompe d'injection de carburant pour moteur à combustion interne comportant au moins deux pistons de pompe (37) qui sont animés d'un mouvement de va-et-vient par un entraînement à came et délimitant une chambre de travail de pompe (53) qui est reliée en permanence à une ouverture de distributeur (61) à la périphérie d'un distributeur (35) entraîné de façon synchrone à l'entraînement par came des pistons de pompe, ouverture par l'intermédiaire de laquelle le distributeur est relié, au cours de chaque course de pompe des pistons de pompe (37) avec, chacun, un de plusieurs canaux sous pression (62) susceptible d'être mis en communication avec les points d'injection (64) du moteur à combustion interne, qui en outre est relié pendant une de chaque course d'aspiration des pistons de pompe (37) à un réservoir de stockage (6, 58) et, qui peut être mis en communication avec une chambre de décharge (6), par une vanne commandée électriquement pendant l'une des parties de la course de pompe des pistons de pompe pour la régulation de la course des pistons de pompe servant à l'injection où l'entraînement par came est constitué d'au moins une pièce restant pratiquement fixe (13, 33, 93) et une pièce entraînée en rotation (9, 13'', 33'), dont l'une comporte une piste de came (11), avec des cames se situant dans un plan radial par rapport à l'axe de la pièce tournante, et l'autre pièce comporte une pièce portant les piston dans laquelle sont pratiqués des alésages radiaux (36), qui par interaction des galets (31) sur une pièce les portant (13) guidés dans des alésages de guidage radiaux (29), coopèrent avec la piste de came et en conséquence du déplacement relatif de la pièce restant fixe de l'entraînement par came par rapport à la pièce entraînée en rotation par circulation des galets (31) sur la piste de came (11), sont déplacées l'une par rapport à l'autre, et avec un couplage (46, 47, 49) par lequel le distributeur (35) en forme d'un arbre est entraîné coaxialement par rapport à la pièce entraînée en rotation et guidé dans un cylindre de distributeur (42) est accouplé à la pièce entraînée en rotation (8), caractérisée en ce que la pièce portant les pistons (33, 33') est accouplée par une bielle d'accouplement (39, 97) placée radialement par rapport à l'axe de la pièce entraînée en rotation (8, 8') à la pièce portant les galets (13, 13') recevant les alésages de guidage des galets (31), où la bielle d'accouplement (39, 97) est liée rigidement avec une des pièces porteuses (13, 13'; ou 33, 33') et comporte à son extrémité une tête munie d'une surface sphérique (40, 99) qui est introduite dans une cavité (41, 98) sur l'autre pièce porteuse et peut compenser les variations d'alignement en direction radiale et axiale.

2. Pompe d'injection de carburant selon la revendication 1, caractérisée en ce que la piste de came (11) est placée sur la pièce entraînée en rotation de l'entraînement par came (8, 9) et en ce que, sur le distributeur (35), est supportée la pièce portant les pistons (33, 33') de façon à pouvoir tourner comme un élément annulaire et est entourée par la pièce portant les galets (13) et est accouplée à celle-ci.

3. Pompe d'injection de carburant selon la revendication 1, caractérisée en ce que la piste de came (11) est placée sur la pièce restant pratiquement fixe (93), le distributeur est formé sur une pièce faisant saillie du cylindre de distributeur (42) comme pièce portant les pistons (33') et est accouplé par la pièce d'accouplement (97) avec la pièce de l'entraînement par came entraînée en rotation en tant que pièce portant les galets (13'').

4. Pompe d'injection de carburant selon la revendication 2 ou 3, caractérisée en ce que la position relative de la pièce de l'entraînement par came restant fixe au moins pour l'essentiel par rapport à un point de la pièce entraînée en rotation de l'entraînement par came déterminé en retour par la fréquence de la rotation, est variable.

5. Pompe d'injection de carburant selon l'une des revendications précédentes, caractérisée en ce que le distributeur (35) comporte à son extrémité faisant face à la pièce entraînée en rotation (8) une partie en forme de collet (44) qui présente sur sa surface extérieure une gorge longitudinale traversant de part en part et une cavité non traversante (49) débouchant sur le côté de la partie en forme de collet faisant face à la pièce entraînée en rotation (8) où la gorge longitudinale traversant de part en part possède au moins la largeur et un écartement radial à fond de gorge de dimension égale ou plus petite que la cavité non traversante, et en ce qu'un ressort de pression (48) est bandé entre l'extrémité du distributeur et la pièce entraînée en rotation (8), grâce auquel le distributeur à l'état d'insertion avec l'extrémité de la cavité non traversante (49) se met en place sur une bielle d'accouplement (46) radiale liée avec la pièce entraînée en rotation (8) faisant saillie dans celle-ci.

6. Pompe d'injection de carburant selon la revendication 5, caractérisée en ce que l'extrémité de la bielle d'accouplement (46), faisant saillie dans la cavité, est sous forme de sphère.

7. Pompe d'injection de carburant selon la revendication 5 ou 6, caractérisée en ce que le diamètre de la partie en forme de collet (44) est plus petit ou au plus égal au diamètre du cylindre de distributeur (42).

8. Pompe d'injection de carburant selon la revendication 5 ou 6, caractérisée en ce que la partie en forme de collet (44) est sous forme d'une bague fixée à l'extrémité du distributeur (35).

9. Pompe d'injection de carburant selon l'une des revendications précédentes, en particulier selon la revendication 2 ou 3, caractérisée en ce que la pièce entraînée en rotation (8, 8') est guidée sur la périphérie extérieure dans le boîtier de la pompe d'injection de carburant.

10. Pompe d'injection de carburant selon l'une des revendications précédentes, en particulier selon la revendication 2, caractérisée en ce que la pièce portant les galets (13) est guidée radialement dans le boîtier de pompe.

11. Pompe d'injection selon la revendication 10, caractérisée en ce que le boîtier de pompe est constitué d'une pièce en forme de pot (1) et d'une pièce de couvercle (2) fermant la précédente dans lequel sont placés le cylindre de distributeur (42) et les canaux sous pression (62) et qui possède une pièce de guidage cylindrique (18) qui se situe coaxialement à l'axe du cylindre de distributeur (42) et fait saillie dans la chambre intérieure (6) à partir de la pièce de couvercle fermée par la pièce en forme de pot, et à sa périphérie et guide raidalement la pièce portant les galets par une seconde pièce à alésage en gradin (15) d'un alésage en gradin traversant radialement la pièce portant les galets (13).

12. Pompe d'injection de carburant selon la revendication 11, caractérisée en ce que la pièce portant les galets (13) est reliée de façon rigide et amovible par une bielle d'accouplement (22) qui à une de ses extrémités extérieure, est liée à un moteur de réglage (16), et par son autre extrémité intérieure fait saillie dans une cavité annulaire (20) sur laquelle elle se trouve en position axiale.

13. Pompe d'injection de carburant selon la revendication 12, caractérisée en ce que la bielle d'accouplement (22') est supportée dans un alésage traversant de part en part (23) sur la pièce portant les galets (13) et présente à son extrémité intérieure un aplatissement (87) dont l'extrémité tournée vers l'extérieur (88) sert de butée de profondeur de la bielle d'accouplement sur une vis de serrage (89) coupant l'alésage traversant et le coupant transversalement, où le support de galets est fendu à partir du côté frontal du côté de la vis de serrage sur au moins une partie de la longueur de l'alésage traversant.

14. Pompe d'injection de carburant selon la revendication 12 ou 13, caractérisé en ce que la bielle d'accouplement (22) est de forme sphérique, à son extrémité, faisant saillie dans la cavité (20).

15. Pompe d'injection de carburant selon l'une des revendications précédentes, caractérisée en ce que la chambre de travail de la pompe (53) est en commutation permanente avec une chambre annulaire (65) formée entre le distributeur (35) et le cylindre de distributeur (42), à partir de laquelle part un canal de décharge (66) s'étendant dans le boîtier vers une vanne (67) commandée électriquement.

16. Pompe d'injection de carburant selon la revendication 15, caractérisée en ce que la soupape commandée électriquement est placée du côté frontal dans le boîtier de pompe d'injection de carburant et de façon centrale entre les canaux sous pression (62) partant annulairement autour du cylindre de distributeur.

17. Pompe d'injection de carburant selon la revendication 16, caractérisée en ce que la pompe commandée électriquement est une électrovanne dont l'élément de fermeture commandé par l'énergie des électroaimants est sous forme d'une aiguille de soupape (70) équilibrée en pression, dont l'axe se situe parallèlement ou coxialement à l'axe du distributeur (35) et sa surface d'étanchéité (72) faisant face du côté frontal à l'extrémité du distributeur est de forme sphérique et coopère avec un siège de soupape (73) qui limite du côté de l'aiguille de soupape, directement avec la chambre de travail de la pompe (53), la partie du côté haute pressions du canal de décharge (66).

18. Pompe à injection de carburant selon la revendication 17, caractérisée en ce qu'un alésage (85) part de la chambre annulaire (65) dans lequel est placé un capteur de pression (84).

19. Pompe d'injection de carburant selon l'une des revendications précédentes, caractérisée en ce que sur le distributeur du côté de la périphérie sont prévues des rainures de remplissage (54) qui sont reliées à des ouvertures de remplissage de la canalisation de remplissage (55), lors de la course d'aspiration des pistons de pompe et relient la chambre de travail de la pompe (53) à une chambre d'aspiration (6) insérée dans le boîtier de la pompe.

20. Pompe d'injection de carburant selon la revendication 19, caractérisée en ce que les rainures de remplissage sont placées dans la zone de la pièce portant les pistons non entraînée en rotation et que les ouvertures de remplissage sont prévues dans la pièce portant les pistons (33) placée dans la chambre intérieure de la pompe.

21. Pompe à injection de carburant selon la revendication 19, caractérisée en ce que les rainures de remplissage (54') se trouvent dans la zone du cylindre de distributeur (42) dans laquelle débouchent les ouvertures de remplissage.

22. Pompe d'injection de carburant selon l'une des revendications précédentes, caractérisée en ce que la pièce de boîtier en forme de pot (1) comporte une bague (91) se situant axialement à côté de la partie portant la piste de came dont le diamètre est au plus égal au diamètre sur lequel se situe la base de came de la piste de came.

23. Pompe d'injection de carburant selon la revendication 22, caractérisée en ce que la bague est sous forme d'une bague introduite dans la pièce de boîtier en forme de pot.

24. Pompe d'injection de carburant selon la revendication 23, caractérisée en ce que la bague est constituée de matière synthétique.

25. Pompe d'injection de carburant selon l'une des revendications précédentes, caractérisée en ce que la vanne (67) commandée électriquement est une électrovanne avec une chambre intérieure (106) fermée du côté des hautes pressions, dans laquelle est placé l'enroulement de l'électrovanne, et les galets (31) sont supportés par des poussoirs de galet en forme de soucoupe (30) qui sont insérés de façon étanche dans des alésages de guidage radiaux (36) et auxquels se raccordent une chambre de travail de la pompe (101) du côté faisant face aux galets, qui est reliée par un canal d'aspiration (102) muni d'un clapet anti-retour (104) s'ouvrant dans la direction de l'alimentation au réservoir de stockage, sur lequel peut se décharger un canal de décharge, où se situe un des canaux de la chambre intérieure de vanne (106) de la vanne électromagnétique (67).

26. Pompe d'injection de carburant selon la revendication 25, caractérisée en ce que la soupape anti-retour (104) est placée dans la canalisation d'aspiration (102) entre l'électrovanne (67) et les poussoirs de galets (30).

27. Pompe d'injection de carburant selon la revendication 26, caractérisée en ce que le canal de décharge est relié en permanence par un étranglement ou une soupape anti-retour au réservoir de carburant.

28. Pompe d'injection de carburant selon la revendication 26, caractérisée en ce que le canal de décharge est alternativement ouvert et fermé par un élément se déplaçant de façon synchrone à la pièce entraînée en rotation.

29. Pompe d'injection de carburant selon l'une des revendications précédentes, caractérisée en ce que la vanne commandée électriquement (67) pour la commande de la course des pistons de pompe assurant l'injection est fermée au début de la course de pompe des pistons de pompe (37), et ouverte à la fin de la course d'alimentation de la pompe assurant l'injection, où pour le réglage du début de l'injection sous pression du carburant, on peut faire varier la position relative d'au moins la pièce restant fixe pour l'essentiel de l'entraînement par came par rapport à un point revenant avec la fréquence de rotation de la pièce entraînée en rotation de l'entraînement par came.

30. Pompe d'injection de carburant selon la revendication 29, caractérisée en ce que le déplacement de la position relative en fonction d'au moins un paramètre d'entraînement, en particulier du régime du moteur à combustion interne, est obtenue à l'aide d'un moteur de réglage (16).

31. Pompe d'injection de carburant selon la revendication 30, caractérisée en ce que le moteur de réglage comporte un piston de réglage (27) agissant à l'encontre de la force d'un ressort par une pression de commande.

32. Pompe d'injection de carburant selon la revendication 31, caractérisée en ce que la pression de commande peut varier grâce au remplissage ou à l'évacuation de la chambre de travail (75) limitée par le piston de réglage (27) commandé par une soupape électrique (78) qui est alimentée en carburant sous pression par une source de pression.

33. Pompe d'injection de carburant selon la revendication 32, caractérisée en ce que la soupape commandée électriquement (78) est actionnée de façon cylindrique avec un rapport variable de curée de cycle.

34. Pompe d'injection de carburant selon les revendications 29 à 33, caractérisée en ce que le déplacement de la position relative est obtenu par un élément de répétition (84) et régulé d'après une valeur de consigne prédéterminée, et est pris en compte par la commande du point d'ouverture de la soupape commandée électriquement (67).

35. Pompe d'injection de carburant selon les revendications 29 à 33, caractérisée en ce que le déplacement de la position relative est précommandée par des paramètres de fonctionnement et par la commande du point de fermeture de la vanne commandée électriquement (67) après réglage du début de la course d'alimentation du début de l'injection et après que soit commandée ou réglée par le point de ré-ouverture de la vanne commandée électriquement la fin de la période d'injection et de ce fait la quantité à injecter.

FIG.1

# FIG.2

# FIG. 3

FIG. 4

FIG. 5

FIG. 6

FIG. 7